Europäisches Patentamt

European Patent Office

Office européen des brevets

(11) Numéro de publication : **0 393 752 B1**

(12) # FASCICULE DE BREVET EUROPEEN

(45) Date de publication du fascicule du brevet :
**19.11.92 Bulletin 92/47**

(51) Int. Cl.⁵ : **B64C 39/00**

(21) Numéro de dépôt : **90200875.4**

(22) Date de dépôt : **10.04.90**

(54) **Rotor apte à développer dans un fluide des efforts sustentateurs et/ou propulsifs, procédé de pilotage et aéronef équipé d'un tel rotor.**

(30) Priorité : **17.04.89 FR 8905185**

(43) Date de publication de la demande :
**24.10.90 Bulletin 90/43**

(45) Mention de la délivrance du brevet :
**19.11.92 Bulletin 92/47**

(84) Etats contractants désignés :
**AT BE CH DE DK ES FR GB GR IT LI LU NL SE**

(56) Documents cités :
**FR-A- 2 309 401**
**FR-A- 2 375 090**
**GB-A- 371 803**
**US-A- 2 580 428**

(73) Titulaire : **Servanty, Pierre**
**14, avenue Jean-Jacques Rousseau**
**F-93600 Aulnay sous Bois (FR)**

(72) Inventeur : **Servanty, Pierre**
**14, avenue Jean-Jacques Rousseau**
**F-93600 Aulnay sous Bois (FR)**

(74) Mandataire : **Barre, Philippe**
**Cabinet Barre-Gatti-Laforgue 95 rue des**
**Amidonniers**
**F-31069 Toulouse Cédex (FR)**

EP 0 393 752 B1

## Description

L'invention concerne un ensemble rotor perfectionné -désigné par la suite par "rotor"- comprenant au moins une aile profilée et destiné à être mis en rotation dans un fluide en vue de développer des efforts sustentateurs et/ou propulsifs. Elle vise également un procédé de pilotage dudit rotor permettant de commander à chaque instant le mouvement des ailes profilées en vue d'obtenir les efforts aérodynamiques (ou hydrodynamiques) désirés. L'invention s'applique tout particulièrement dans le domaine aéronautique pour la réalisation d'aéronefs.

On sait que les hélicoptères possèdent un rotor comprenant des pales entraînées en rotation autour d'un axe perpendiculaire à leur direction longitudinale ; chaque section de pale est ainsi animée d'une vitesse linéaire relative proportionnelle à sa distance à l'axe de rotation. Dans ces conditions, les efforts sustentateurs et/ou propulsifs produits, rapportés à la surface balayée, demeurent limités par les phénomènes aérodynamiques (vitesse maximale en bout de pale, très faible rendement près du moyeu...), et il s'ensuit que le rendement énergétique de ce type de rotor est limité (portance spécifique de l'ordre de 40 à 50 Newton par cheval).

Un autre type de rotor a fait l'objet d'études et l'on pourra par exemple se reporter aux brevets suivants qui en décrivent des exemples : brevets FR 2.375.090, FR 2.309.401, FR 2.181.486, FR 2.008.452. Ces rotors comprennent des pales ou ailes profilées (désignées par la suite par "ailes profilées" en raison de leur agencement par rapport au filet fluide qui est similaire à celui d'ailes d'avions) qui sont entraînées en rotation autour d'un axe parallèle à leur direction longitudinale. Dans ces conditions, chaque section d'aile profilée travaille dans les mêmes conditions aérodynamiques (vitesse, incidence, circulation identiques). On peut donc s'attendre à ce que ce type de rotor puisse bénéficier d'un rendement aérodynamique très supérieur à celui des rotors d'hélicoptère. Toutefois, dans ce type de rotor, chaque aile profilée est amenée au cours de sa rotation à suivre une loi d'incidence qui détermine les performances du rotor et la conception des rotors connus de ce type conditionne une loi d'incidence figée, c'est-à-dire qui se répète indéfiniment identique à elle-même : le choix relativement arbitraire de cette loi (notamment imposé par des contraintes technologiques) ne peut en aucun cas dans les rotors connus de ce type, permettre d'optimiser le rendement lorsque les conditions de fonctionnement varient (vitesse de rotation du rotor, vitesse d'avancement, incidence du vent relatif...). De plus, ces rotors à cinématique figée sont inexploitables en pratique car, dans des conditions de fonctionnement données, ils imposent l'intensité et/ou la direction de l'effort aérodynamique produit et ne permettent pas de réaliser les modulations nécessaires à un pilotage effectif de l'aéronef. En outre, même sur le plan théorique, les documents antérieurs qui décrivent ce type de rotor ne fournissent aucun enseignement qui permettrait d'asservir la loi d'incidence aux efforts désirés.

La présente invention se propose de pallier les insuffisances des rotors connus du type précité possédant des ailes profilées tournant autour d'un axe parallèle à la direction longitudinale des ailes profilées ; l'invention vise à permettre de bénéficier pleinement des avantages que l'on peut attendre de ce type de rotor, en particulier rendement aérodynamique amélioré par rapport à celui des rotors d'hélicoptère.

Un des objectifs de l'invention est notamment de fournir un rotor perfectionné ayant des ailes profilées dont l'incidence soit ajustable en temps réel selon une loi non figée.

Un autre objectif est de fournir un procédé de pilotage dudit rotor, permettant à chaque instant d'asservir la loi d'incidence de chaque aile profilée en vue d'obtenir les efforts sustentateurs et/ou propulsifs désirés à l'instant considéré, avec un rendement énergétique optimisé.

Le rotor visé par l'invention, qui est destiné à se rattacher à une cellule mobile dans un fluide en vue d'exercer sur celle-ci des efforts sustentateurs et/ou propulsifs, est du type comprenant une structure-porteuse montée sur ladite cellule de façon à pouvoir être entraîné en rotation autour d'un axe de rotation (O) et au moins une aile profilée s'étendant parallèlement à l'axe de rotation (O) et articulée sur la structure-porteuse par une liaison-pivot d'axe (B) sensiblement parallèle audit axe de rotation (O), ce rotor étant amené à tourner dans le fluide autour de l'axe de rotation (O) à une vitesse de rotation $\omega$ ; le procédé de pilotage conforme à l'invention consiste :

- à mémoriser préalablement des données représentatives des paramètres structurels suivants du rotor : n (nombre d'ailes profilées du rotor) ; E (envergure de chaque aile profilée) ; R (distance entre l'axe de rotation O et l'axe B de la liaison pivot) ; r (distance sur la corde de l'aile profilée entre l'axe B et un point P situé sensiblement au quart arrière du profil) ; a (coefficient de la transformation conforme de l'aile profilée) ; $A = 2\pi (a_1 - a^2) + S$ ; $B = 2\pi (a_1 + a^2 - S)$ ; $C_1 = 2\pi (\frac{a_1 a_2}{a^2} + \frac{a_2 a_3}{a^4}) - \pi(A_{-1} - a_1 A_1 - 2a_2 A_2$

$- 3a_3 A_3...)$, où $a_1, a_2... a_i$ sont les termes de la transformation conforme développée en série de Laurent, $A_{-1}, A_1,... A_i$ les termes du produit de la transformation conforme et de sa conjuguée développée en série de Laurent et S la surface normale du profil,

- à mesurer et déterminer à chaque instant la vitesse relative V de déplacement de la cellule par rapport au fluide, la vitesse de rotation ω du rotor et la masse volumique ρ du fluide à partir de mesures de la pression dynamique, de la pression statique et de la température du fluide,

- à mesurer et déterminer en permanence au cours de la rotation, l'azimut aérodynamique φ de chaque aile profilée pour engendrer un signal de mesure correspondant, ledit azimut aérodynamique étant l'angle formé, d'une part, par la direction du vent relatif, d'autre part, par le plan M contenant l'axe de rotation O et l'axe B de la liaison-pivot de l'aile profilée considérée,

- à engendrer des signaux de consigne représentatifs des efforts désirés sur la cellule (efforts traduits par leurs projections P et T respectivement selon une direction perpendiculaire au vent relatif et selon la direction dudit vent relatif, lesdits efforts P et T étant désignés par la suite par portance et traînée),

- à déterminer en permanence, pour chaque aile profilée, à partir des paramètres mémorisés, des grandeurs mesurées et des signaux de consigne, l'angle géométrique instantané ψ défini par la corde de l'aile profilée et par le plan M répondant à ∓ 0,2 radian près aux relations suivantes (tous les angles étant définis dans le sens trigonométrique) :

$$(1) \qquad \cos \varphi_i = C \sin (\varphi - \psi) + \cos \psi + \frac{r}{R\omega} (\omega - \frac{d\psi}{dt})$$

$$(2) \qquad P = \frac{nE}{2\eta} \int_0^{2\pi} -\rho \left\{ \left[ \Gamma - B \left(\omega - \frac{d\psi}{dt}\right)\right] m - C_1 \left(\omega - \frac{d\psi}{dt}\right)^2 - A \frac{d\ell}{dt} \right\} \sin(\varphi - \psi) . \, d\varphi$$

$$+ \frac{nE}{2\eta} \int_0^{2\pi} \rho \left\{ \left[ \Gamma + A \left(\omega - \frac{d\psi}{dt}\right)\right] \ell + C_1 \frac{d^2\psi}{dt^2} - B \frac{dm}{dt} \right\} \cos(\varphi - \psi) . \, d\varphi$$

$$(3) \qquad T = \frac{nE}{2\eta} \int_0^{2\pi} -\rho \left\{ \left[ \Gamma - B \left(\omega - \frac{d\psi}{dt}\right)\right] m - C_1 \left(\omega - \frac{d\psi}{dt}\right)^2 - A \frac{d\ell}{dt} \right\} \cos(\varphi - \psi) . \, d\varphi$$

$$+ \frac{nE}{2\eta} \int_0^{2\pi} -\rho \left\{ \left[ \Gamma + A \left(\omega - \frac{d\psi}{dt}\right)\right] \ell + C_1 \frac{d^2\psi}{dt^2} - B \frac{dm}{dt} \right\} \sin(\varphi - \psi) . \, d\varphi$$

avec

$$(4) \quad O \leqq \varphi_{11} \leqq \varphi_{12} \leqq \pi$$

$$(5) \quad (a) \quad \varphi_i = \varphi_{11} \quad et \quad \Gamma = 4\pi a R \omega \cos \varphi_{11} \quad si \quad -\varphi_{11} < \varphi < \varphi_{11}$$

$$(b) \quad \varphi_i = \varphi \quad et \quad \Gamma = 4\pi a R \omega \cos \varphi \quad si \quad \varphi_{11} \leqq \varphi < \varphi_{12}$$

$$(c) \quad \varphi_i = \varphi_{12} \quad et \quad \Gamma = 4\pi a R \omega \cos \varphi_{12} \quad si \quad \varphi_{12} < \varphi < 2\pi - \varphi_{12}$$

$$(d) \quad \varphi_i = \varphi \quad et \quad \Gamma = 4\pi a R \omega \cos \varphi \quad si \quad 2\pi - \varphi_{12} \leqq \varphi \leqq 2\pi - \varphi_{11}$$

$$(6) \qquad l = - R \omega [\sin \psi + C \cos (\varphi - \psi)]$$

$$(7) \qquad m = R \omega [\cos \psi + C \sin (\varphi - \psi)] - \frac{r}{2} (\omega - \frac{d\psi}{dt})$$

et

$$(8) \qquad C = \frac{V}{\omega R}$$

- et à asservir l'angle géométrique instantané de chaque aile profilée à la valeur de l'angle obtenu ψ pour ladite aile.

Une modélisation des phénomènes aérodynamiques instationnaires a permis de déterminer une famille de lois d'incidence correspondant à un rendement énergétique maximal, définies par les équations (1), (4) et (5). Dans le procédé de l'invention, le cycle de rotation (un tour de rotor) est divisé en quatre secteurs délimités

par les angles $\varphi_{11}$, $\varphi_{12}$, $2\pi - \varphi_{12}$, $2\pi - \varphi_{11}$, dits angles de commutation. Les deux secteurs qui correspondent à l'azimut aérodynamique $\varphi$ compris entre, d'une part, $2\pi - \varphi_{11}$ et $\varphi_{11}$, d'autre part, $\varphi_{12}$ et $2\pi - \varphi_{12}$, sont parcourus avec une loi d'incidence qui assure un écoulement à circulation constante (qui peut être différente pour chacun des secteurs) ; ces lois sont caractérisées par la constance de la circulation et sont traduites par l'équation différentielle (1) sous les conditions correspondantes (5 a, c) : aucune perte énergétique n'est engendrée sur ces secteurs en raison de la constance de la circulation. Les deux autres secteurs assurent la continuité de la circulation entre les deux secteurs à circulation constante précitées ; cette continuité est garantie par l'équation différentielle (1) sous les conditions correspondantes (5 b, d) et autorise le passage effectif d'une loi d'incidence à l'autre. La direction et l'intensité des efforts produits sont ajustées à chaque instant par la valeur qui est donnée à chaque cycle à chacun des angles de commutation, conformément aux équations (2), (3), (6) et (7). L'intégration à chaque instant de l'équation différentielle (1) sous la condition (5) (correspondant au secteur en cours) fournit la consigne d'asservissement de l'angle géométrique instantané $\psi$ de chaque aile profilée. Il convient de noter que l'ensemble des relations précitées (1) à (8) définit la cinématique d'une aile profilée, l'azimut aérodynamique $\varphi$ étant relatif à cette aile profilée.

Selon un mode de mise en oeuvre préféré, l'on détermine l'angle géométrique instantané $\psi$ par les opérations suivantes :
- pour l'ensemble des ailes profilées :
  . détermination préalable d'une table de correspondance de valeurs entre les paramètres $\varphi_{11}$, $\varphi_{12}$, $\dfrac{P}{C\omega^2\rho}$ et $\dfrac{T}{\omega^2\rho}$, cette table étant déterminée en affectant aux paramètres $\varphi_{11}$, $\varphi_{12}$ (dits angles de commutation), des valeurs discrètes s'échelonnant sur la plage de variation (4) et en calculant pour chaque couple de valeurs ($\varphi_{11}$, $\varphi_{12}$) les valeurs de $\dfrac{P}{C\omega^2\rho}$ et $\dfrac{T}{\omega^2\rho}$, solutions des relations (2), (3),
  . mémorisation de ladite table de correspondance,
  . calcul en permanence des grandeurs $C = \dfrac{V}{\omega\rho}$, $\dfrac{P}{C\omega^2\rho}$ et $\dfrac{T}{\omega^2\rho}$, en fonction des efforts P et T désirés et des paramètres V, $\omega$ et $\rho$ déterminés,
  . exploration de la table de correspondance pour retrouver le couple $\dfrac{P}{C\omega^2\rho}$ et $\dfrac{T}{\omega^2\rho}$, le plus proche des grandeurs correspondantes calculées et extraction des valeurs des paramètres $\varphi_{11}$, $\varphi_{12}$ correspondants,
  . pour chaque aile profilée :
  . résolution de l'équation différentielle (1), en donnant aux paramètres $\varphi_{11}$, $\varphi_{12}$ les valeurs extraites de la table, en vue d'obtenir la valeur recherchée de l'angle géométrique instantané $\psi$ concernant l'aile profilée considérée.

La détermination des angles de commutations à partir des efforts aérodynamiques à engendrer (P, T) conduirait à des calculs très lourds en raison du caractère inversé des équations (celles-ci permettant un calcul facile des efforts P et T à partir d'une loi d'incidence de la famille, mais beaucoup plus complexe dans le sens inverse). Les tables de correspondance sus-évoquées sont établies préalablement au moyen d'un calculateur disposant d'une mémoire dans laquelle sont stockés les paramètres structurels du rotor, en résolvant les équations dans le sens direct ; ceci permet ensuite, au cours du vol, une détermination rapide par des moyens de calcul légers et classiques des angles de commutation $\varphi_{11}$ et $\varphi_{12}$ à partir des efforts P et T (détermination compatible avec l'asservissement en temps réel). Ensuite, l'intégration de l'équation différentielle sur chaque secteur du cycle est une opération de calcul courante réalisable en temps réel, qui fournit l'angle géométrique $\psi$ recherché servant de consigne à l'asservissement.

De plus, pour assurer la continuité du mouvement réel de chaque aile profilée, l'on mesure en permanence la valeur réelle $\psi_r$ de l'angle géométrique instantané de l'aile profilée considérée et l'on utilise cette valeur réelle en vue de servir de constante d'intégration dans la résolution de l'équation différentielle.

Par ailleurs, selon un mode de mise en oeuvre avantageux, l'asservissement de l'angle géométrique instantané de chaque aile profilée consiste :
  . à assurer un asservissement moyen de l'ensemble des ailes profilées selon une loi d'incidence cyclique moyenne $\psi_m = f(\varphi)$ par une chaîne cinématique réversible apte à fournir ou récupérer de l'énergie selon les caractéristiques de charge des ailes profilées,
  . à assurer un asservissement complémentaire de chaque aile profilée, à partir de la valeur calculée de l'angle géométrique instantané $\psi$, en ajoutant à chaque instant une incidence additionnelle $\psi_c = \psi - \psi_m$ au moyen d'un actionneur.

Cet asservissement par sommation permet de minimiser la puissance à installer pour entraîner le rotor et ajuster l'incidence des ailes profilées. En effet, à certains instants du cycle, les ailes profilées sont génératrices de puissance, alors qu'à d'autres instants, elles exigent des puissances importantes. La chaîne cinématique réversible commune aux ailes profilées opère un transfert d'énergie entre les différentes ailes profilées, cependant que l'actionneur d'asservissement complémentaire associé à chaque aile profilée réalise un ajustement fin de l'angle géométrique $\psi$ de l'aile considérée : du fait de la présence de la chaîne cinématique réversible, ces actionneurs ont une énergie moindre à fournir (dimensions plus faibles, temps de réponse plus petit...).

L'invention s'étend à un rotor perfectionné, comprenant une membrure-porteuse adaptée pour être montée sur la cellule de façon à pouvoir être entraînée en rotation autour d'un axe de rotation (O) et au moins une aile profilée s'étendant parallèlement à l'axe de rotation (O) et articulée sur la membrure-porteuse par une liaison-pivot d'axe (B) sensiblement parallèle à l'axe de rotation (O) ; selon la présente invention, ce rotor comprend, combinés aux moyens précédents :

. des moyens de mémorisation de données spécifiques du rotor,

. des moyens de mesure et de détermination de la vitesse relative V de déplacement de la cellule, de la vitesse de rotation $\omega$ du rotor et de la masse volumique du fluide $\rho$ ,

. des moyens de mesure et détermination de l'azimut aérodynamique $\varphi$ de chaque aile profilée au cours de la rotation,

. des moyens de génération de signaux de consigne représentatifs d'efforts désirés P, T,

. des moyens de calcul de l'angle géométrique instantané $\psi$ de chaque aile profilée en fonction des paramètres mémorisés, des valeurs déterminées et des signaux de consigne,

. des moyens d'asservissement de chaque aile profilée, adaptés pour asservir à chaque instant la position angulaire de l'aile à la valeur $\psi$ calculée issue des moyens de calcul.

Selon un mode de réalisation préféré, les moyens d'asservissement comprennent :

- une chaîne cinématique, commune à l'ensemble des ailes profilées et de structure mécanique adaptée pour engendrer en sortie une rotation selon une loi d'incidence cyclique $\psi_m$,

- un distributeur hydraulique à servo-valve, associé à chaque aile profilée, ledit distributeur recevant un signal représentatif de l'écart angulaire $\psi$ - $\psi_r$ pour l'aile profilée considérée et étant adapté pour engendrer une puissance hydraulique directement liée audit écart angulaire,

- et un actionneur hydraulique rotatif associé à chaque aile profilée et recevant la puissance hydraulique du distributeur correspondant, ledit actionneur comprenant, d'une part, un corps mobile en rotation entraîné par la chaîne cinématique selon la loi moyenne $\psi_m$, d'autre part, un arbre de sortie couplé à l'aile profilée considérée en vue d'assujettir la position angulaire de celle-ci.

Ainsi, la chaîne cinématique peut par exemple assurer une translation circulaire de l'ensemble des ailes profilées, de sorte que chaque corps d'actionneur associé à chaque aile profilée présente un calage par rapport au vent relatif, imposé par la loi d'incidence cyclique. Cette loi est une fois pour toute figée par la structure de la chaîne cinématique. Le pilotage et l'optimisation de la loi d'incidence (tels que précédemment définis) sont obtenus par l'entremise du distributeur hydraulique et de l'actionneur attaché à chaque aile, qui imposent à celle-ci son angle effectif d'incidence à chaque instant. L'angle additionnel apporté par cet actionneur hydraulique est ajustable à chaque instant par l'intermédiaire du distributeur hydraulique. Cette solution hydraulique autorise des puissances massiques très élevées et limite les inerties des parties mobiles, permettant ainsi les accélérations rapides nécessaires à l'obtention de la loi optimale de pilotage du rotor déjà définie.

De préférence, la chaîne cinématique précitée comprend un déphaseur adapté pour permettre un calage déterminé de l'origine $\psi_{mo}$ de la loi d'incidence cyclique $\psi_m$. Ce calage permet d'imposer simultanément à tous les corps d'actionneurs la loi cyclique $\psi_m$ en limitant l'amplitude maximum que chaque actionneur doit fournir ; sur chaque cycle, il est en effet possible de minimiser l'amplitude crête de l'angle additionnel $\psi_c$ que doit fournir chaque actionneur par un recalage modulable et approprié de la position angulaire des corps d'actionneur par rapport au vent relatif (origine de la loi $\psi_m$).

En outre, le distributeur hydraulique à servo-valve associé à chaque aile profilée est avantageusement relié à au moins une pompe d'alimentation hydraulique et à au moins un accumulateur hydraulique, agencés de façon que ledit accumulateur hydraulique soit en charge en cas d'excès de puissance disponible sur la pompe et en restitution dans le cas inverse. On réduit considérablement la puissance à installer, puisque, pour les pompes, seule la puissance moyenne maximale est à installer (et non la puissance maximale instantanée).

L'invention s'étend à un aéronef comprenant au moins un rotor tel que ci-dessus défini et un groupe moteur intégré à sa cellule et couplé à l'arbre moteur de chaque rotor.

L'invention ayant été exposée dans sa forme générale, la description qui suit en référence aux dessins annexés en présente un mode de réalisation et illustre le procédé de pilotage ; sur ces dessins qui font partie intégrante de la présente description :

- la figure 1 est une vue schématique latérale d'un aéronef conforme à l'invention,

- la figure 2 en est une demi-vue de dessus,

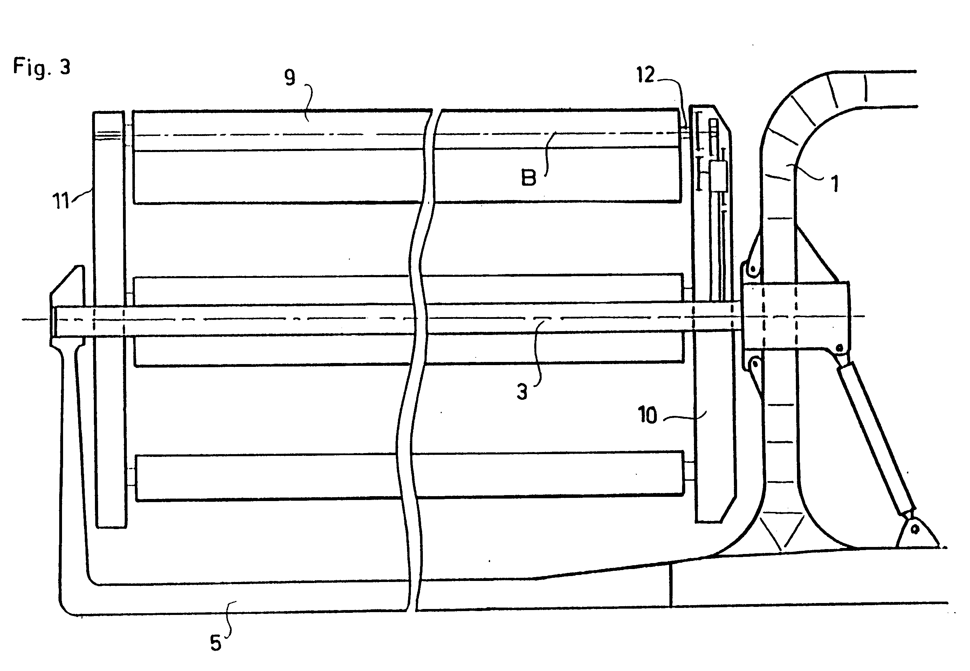

- la figure 3 est une coupe partielle et simplifiée d'un rotor par un plan $P_1$,
- la figure 4 en est une vue en perspective schématique partiellement éclatée,
- la figure 5 est une coupe schématique transversale du rotor par un plan $P_2$,
- la figure 6 est en diagramme fonctionnel illustrant le procédé de pilotage,
- les figures 7, 9 et 10 sont des logigrammes illustrant les procédures de calcul, cependant que la figure 8 est un exemple simplifié de table de correspondance préalablement élaborée et mémorisée,
- la figure 11 est un diagramme fonctionnel de la boucle d'asservissement,
- la figure 12 est un schéma synoptique de la chaîne de puissance et d'asservissement du rotor,
- la figure 13 est un schéma mécanique général de la chaîne cinématique réversible assurant la loi moyenne $\psi_m$,
- la figure 14 est un schéma de détail du déphaseur de cette chaîne,
- la figure 15 est un schéma d'implantation des moyens de puissance hydraulique,
- la figure 16 est une section longitudinale partielle du rotor selon un plan $P_3$,
- la figure 17 est une coupe partielle transversale selon une ligne brisée $P_4$.

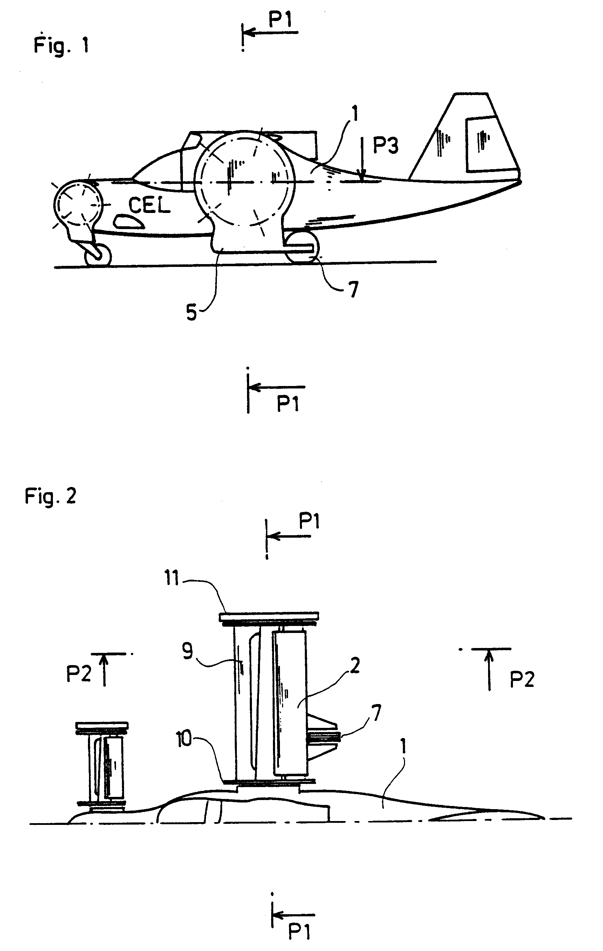

L'aéronef représenté à titre d'exemple aux figures 1 et 2 comprend une cellule 1 de type classique, sur laquelle sont montés en l'exemple quatre rotors conformes à l'invention tels que 2. Les deux rotors avant de dimensions plus réduites sont destinés à permettre le contrôle de l'avion selon l'axe de tangage et jouent le rôle des ailerons horizontaux arrière des avions classiques. Ces rotors sont pilotés selon une loi d'incidences donnant des efforts purement sustentateurs par rapport au vent relatif (T = O P > O). Ils sont structurellement identiques aux rotors principaux arrière destinés à développer des efforts sustentateurs et/ou propulsifs en fonction des commandes du pilote. Les lois d'incidence des deux rotors principaux sont identiques en vol rectiligne et conditions symétriques et pourront être différenciées par les commandes dans le but d'obtenir les mouvements de lacets et de roulis désirés.

Chaque rotor 2 comprend un arbre longitudinal tournant 3 (le terme "longitudinal" se référant à la direction du rotor) qui est porté d'un côté par un moyeu 4 lié à la cellule 1 et qui est soutenu de l'autre côté par une membrure profilée fixe 5 dotée d'un palier, cette membrure revenant se rattacher à la cellule 1. En l'exemple, la membrure profilée 5 est dotée d'une roue 7.

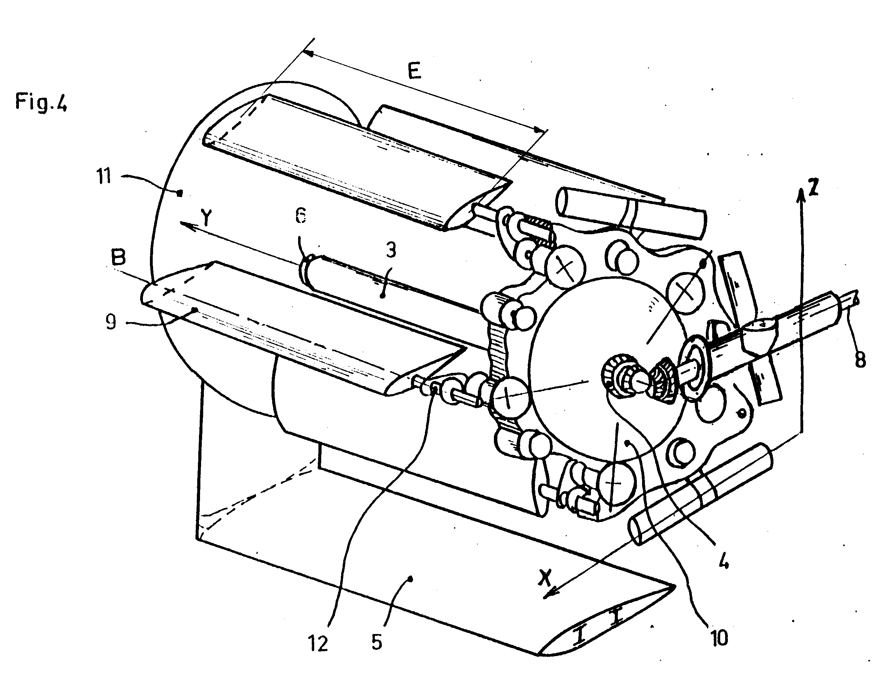

La cellule renferme un groupe moteur qui est commun à l'ensemble des rotors et dont on aperçoit l'arbre de sortie 8 à la figure 4. Cet arbre 8 est couplé à l'arbre 3 de chaque rotor par une transmission mécanique, assurant l'entraînement en rotation du rotor considéré à une vitesse $\omega$.

Chaque rotor comprend cinq ailes profilées telles que 9, angulairement réparties à 72° autour de l'arbre central 3. On a désigné par -E- l'envergure longitudinale de chaque aile profilée.

Les ailes profilées 9 sont portées par une membrure-porteuse comprenant deux flasques 10 et 11 sur lesquels elles sont articulées par des axes tels que 12, constituant une liaison-pivot d'axe B. L'extrémité de l'axe 12 située du côté de la cellule est commandée en rotation comme on le verra plus loin pour imposer une incidence déterminée à l'aile profilée, cependant que l'autre axe sert uniquement de palier.

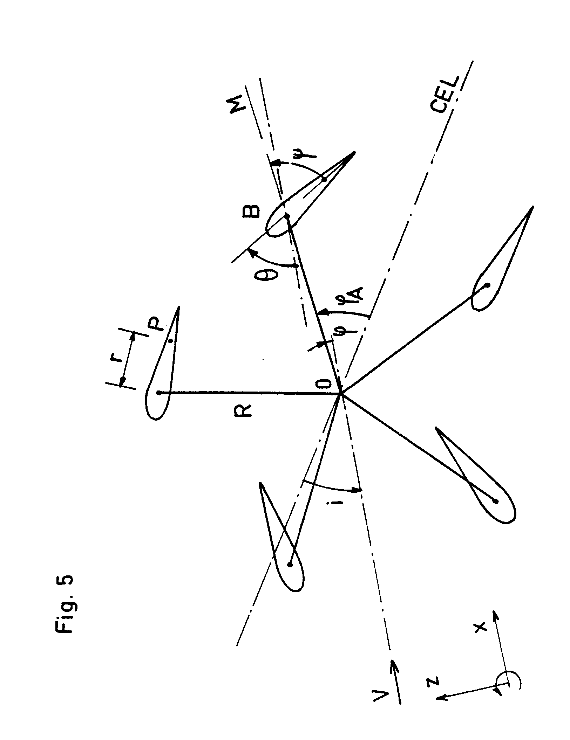

On a représenté à la figure 5 une coupe du rotor par un plan $P_2$ perpendiculaire à son axe. Les ailes profilées 9 sont en l'exemple des profils biconvexes symétriques notamment type "KARMAN-TRCFTZ", mais peuvent être de type différent suivant les performances recherchées. Le nervurage interne de chaque aile profilée est de type classique, à caissons ou autres.

L'aile profilée est articulée autour de ses axes 12 sensiblement au quart avant de sa corde ; ce point constitue approximativement le foyer du profil et c'est par rapport à celui-ci que les efforts aérodynamiques engendrent un couple moyen le plus faible sur l'aile.

On a porté à la figure 5 pour une des ailes profilées les divers paramètres caractéristiques de cette aile et de sa position à un instant donné :
- R : distance entre l'axe de rotation O (axe de l'arbre du rotor 3) et l'axe B de la liaison-pivot,
- r : distance entre l'axe B de la liaison-pivot et le point P situé sensiblement au quart arrière du profil,
- angle géométrique instantané $\psi$ défini par la corde de l'aile profilée et un plan M contenant l'axe de rotation O et l'axe B de la liaison-pivot,
- azimut angulaire $\varphi_A$ formé par un plan de référence lié à la cellule, par exemple l'axe -Cel- de la cellule et par le plan M,
- azimut aérodynamique $\varphi$ formé par la direction du vent relatif V (en fait par la projection du vent relatif sur un plan transversal perpendiculaire au plan M) et par le plan M,
- angle d'incidence de l'aile profilée $\theta = \varphi - \psi$,
- angle d'incidence de la cellule $i = \varphi_A - \varphi$.

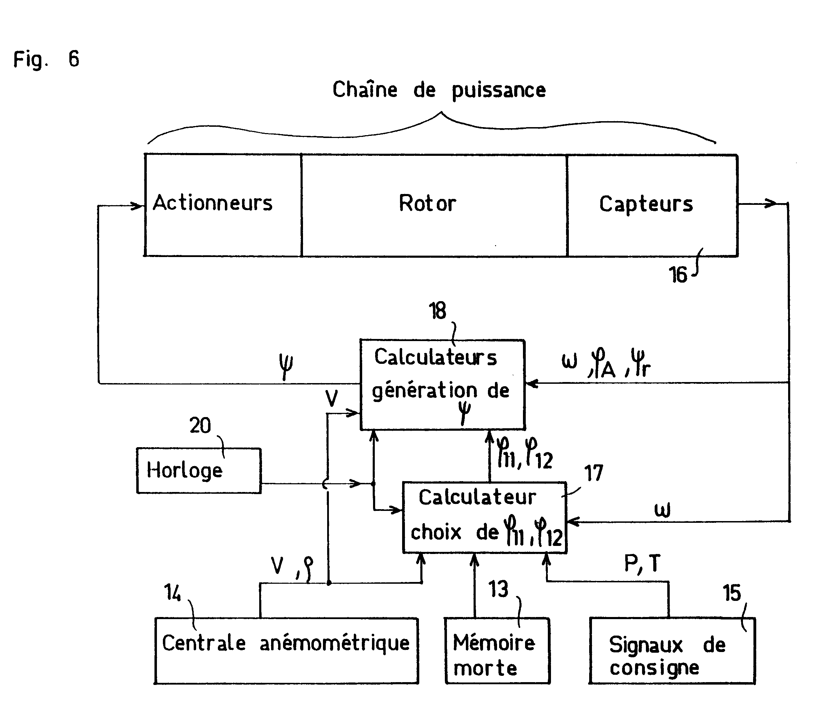

Les moyens qui sont décrits ci-après en référence aux figures 6 à 13 permettent d'ajuster pour chaque aile profilée 9 l'angle géométrique instantané $\psi$ de cette aile de façon à obtenir des efforts P et T désirés fournis par le rotor considéré sur la cellule, ces efforts étant fonctions des conditions extérieures rencontrées et des conditions de vol désirées pour l'aéronef. Ces moyens sont adaptés pour définir l'angle $\psi$ de chaque aile par application des relations (1) à (8) déjà fournies.

Les grandeurs algébriques P et T sont les projections de l'effort aérodynamique à créer par le rotor sur la cellule sous l'action de fluide, respectivement selon une direction perpendiculaire au vent relatif (portance) et selon la direction dudit vent relatif (traînée).

La figure 6 présente le diagramme fonctionnel de commande du rotor, lequel comprend :

- des moyens de mémorisation de données spécifiques du rotor, constitués par une mémoire morte 13 dans laquelle est préalablement stockée une table de correspondance de valeurs entre les angles de commutation $\varphi_{11}$, $\varphi_{12}$ et les grandeurs $\dfrac{P}{C\omega^2\rho}$ et $\dfrac{T}{\omega^2\rho}$ ,

- des moyens de mesure et de détermination de la vitesse relative V de déplacement de la cellule et de la masse volumique du fluide $\rho$ , constituées par une centrale anémométrique 14,

- des moyens de génération de signaux de consigne représentatifs des efforts désirés P, T, constitués par un système classique de pilotage d'aéronef 15 (centrale d'inertie, pilote automatique, commande de vol et électronique associée).

La table de correspondance est obtenue dans une phase préalable de calcul au moyen d'un calculateur non embarqué, disposant d'une mémoire dans laquelle sont rentrés les paramètres structurels suivants :

- nE : envergure équivalente, égale au produit du nombre n d'ailes profilées (cinq pour le rotor décrit en l'exemple) par leur envergure E,

- R : distance entre l'axe de rotation O et l'axe B de la liaison-pivot de chaque aile profilée,

- r : distance sur la corde de l'aile profilée entre l'axe B et le point P situé sensiblement au quart arrière du profil (en l'exemple r est sensiblement égal à la moitié de la longueur de la corde),

- a : coefficient de la transformation conforme appliquée au profil de l'aile (donnée classique du profil concerné, en l'exemple du profil KARMAN-TRCFTZ choisi d'épaisseur relative de 17 % : a = 0,2269),

- $A = 2\pi(a_1 - a^2) + S$, en l'exemple égal à : $- 1{,}258.10^{-2}m^2$,

- $B = 2\pi(a_1 + a^2 - S)$, en l'exemple égal à : $4{,}891.10^{-1}m^2$,

- $C_1 = 2\pi\left(\dfrac{a_1a_2}{a^2} + \dfrac{a_2a_3}{a^4}\right) - \pi(A_{-1} - a_1A_1 - 2a_2A_2 - 3a_3A_3...)$, (en l'exemple $C_1 = 6{,}233.10^{-3}m^3$), où $a_1$, $a_2... a_i$ sont les termes de la transformation conforme développée en série de Laurent, $A_{-1}$, $A_1$,... $A_i$ les termes du produit de la transformation conforme et de sa conjuguée développée en série de Laurent et S le surface normale du profil.

Par ailleurs, un ensemble de capteurs 16 mesure à chaque instant des paramètres réels de configuration du rotor ( $\varphi_A$ : azimut angulaire d'une aile profilée de référence, $\psi_r$ : angle géométrique instantané réel qui caractérise à chaque instant chaque aile profilée).

De plus, le système est doté de moyens de calcul constitués par un premier calculateur 17 appelé à déterminer à chaque instant les angles de commutation $\varphi_{11}$, $\varphi_{12}$, et commun à l'ensemble des ailes profilées, et par un second calculateur 18 associé à chaque aile profilée afin de calculer l'angle géométrique instantané $\psi$ de ladite aile profilée.

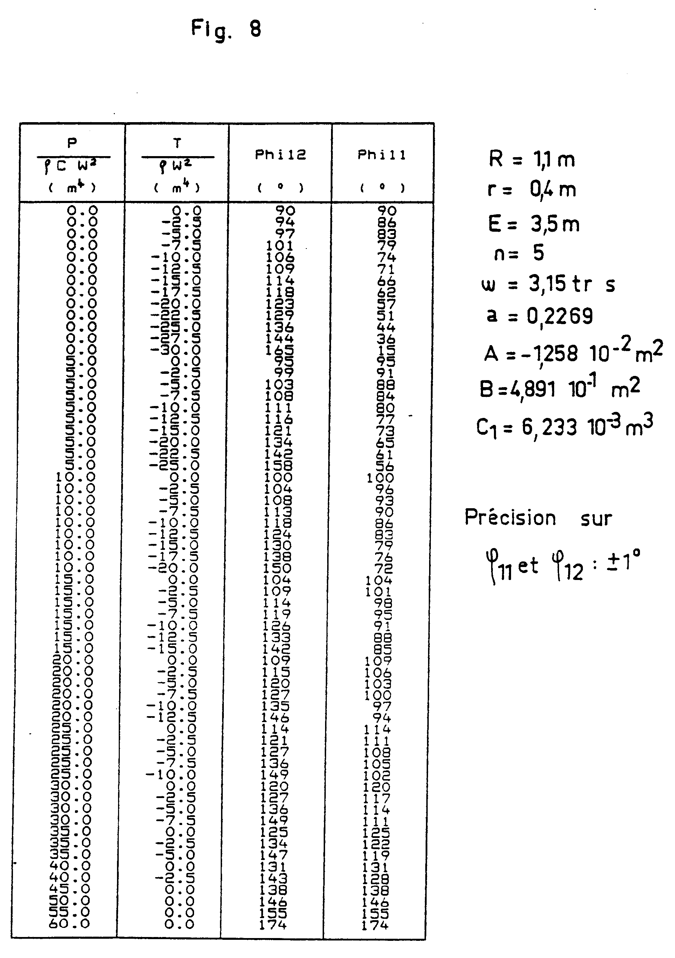

A cet effet, la mémoire morte 13 stocke une table de correspondance de valeurs entre les angles de commutation $\varphi_{11}$, $\varphi_{12}$ et les grandeurs $\dfrac{P}{C\omega^2\rho}$ et $\dfrac{T}{\omega^2\rho}$. Un exemple simplifié de ladite table est fourni à la figure 8 pour le rotor et le profil KARMAN-TREFTZ considéré.

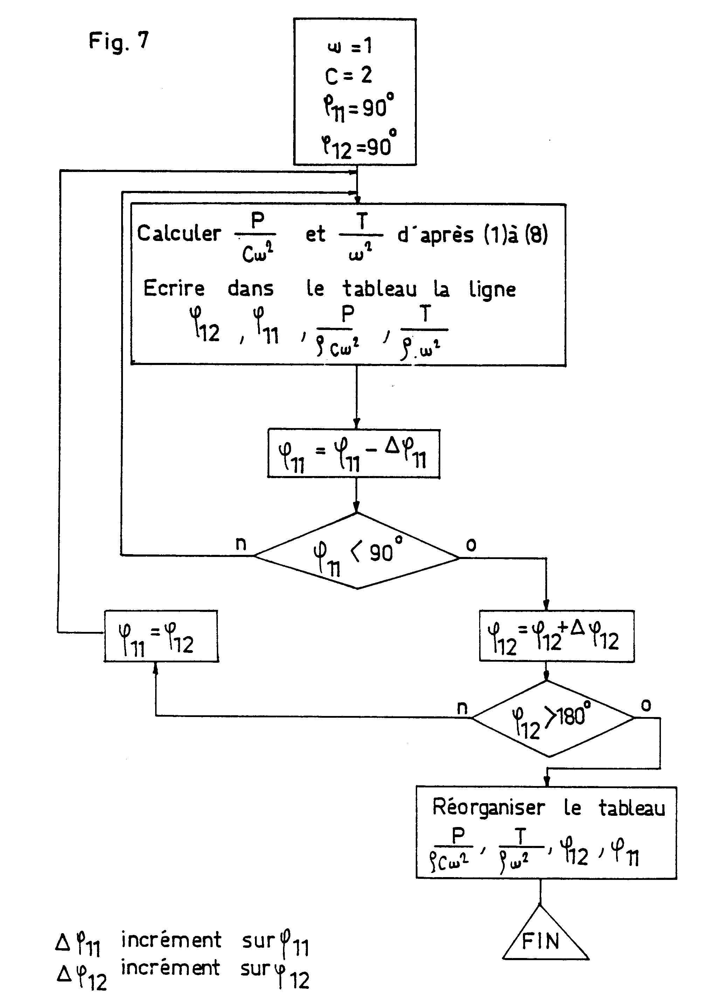

Cette table est définie dans l'étape préalable de calcul précité au moyen du calculateur non embarqué, en donnant aux angles $\varphi_{11}$ et $\varphi_{12}$ des valeurs discrètes, en l'exemple avec un pas de 10 degrés entre 90° et 180°, et en calculant pour chaque couple de valeurs $\varphi_{11}$, $\varphi_{12}$ les valeurs des grandeurs $\dfrac{P}{C\omega^2\rho}$ et $\dfrac{T}{\omega^2\rho}$ au moyen des relations ( 2 ) et ( 3 ). Il est à noter que $90° \leqq \varphi_{11} < \varphi_{12} \leqq 180°$ correspond à des efforts de portance positive (effort porteur) et de traînée négative (propulsion). Le logigramme de calcul de cette table est fourni à la figure 7.

La table de correspondance peut ainsi être mémorisée dans la mémoire 13 sous la forme d'une matrice à quatre colonnes correspondant aux valeurs de $\dfrac{P}{C\omega^2\rho}$ , $\dfrac{T}{\omega^2\rho}$, $\varphi_{11}$, $\varphi_{12}$.

Le calculateur 17 reçoit les paramètres V, $\rho$, $\omega$, P et T de la centrale 14, des capteurs 16 et des moyens de génération 15. Il calcule en permanence les grandeurs $\dfrac{P}{C\omega^2\rho}$, $\dfrac{T}{\omega^2\rho}$ ; La constante $C = \dfrac{V}{\omega R}$ est déterminée à partir des valeurs de V, $\omega$ reçues par le calculateur et de la valeur numérique R, constante intégrée au logiciel de ce calculateur 17. Celui-ci explore ensuite la table de correspondance stockée dans la mémoire 13 en lisant les deux colonnes $\frac{P}{C\omega^2\rho}$, $\frac{T}{\omega^2\rho}$ en vue d'identifier le couple le plus proche des valeurs calculées et en extrayant les valeurs correspondantes de $\varphi_{11}$, $\varphi_{12}$ dans les deux autres colonnes. Toutes les grandeurs sus-évoquées sont communes à l'ensemble des ailes profilées, de sorte que le calculateur 17 est unique.

Par contre, un calculateur 18 est associé à chaque aile profilée. Il dispose dans son programme des valeurs numériques r et R et reçoit à chaque instant :

. les angles de commutation $\varphi_{11}$, $\varphi_{12}$ issus du calculateur 17,

. l'azimut angulaire $\varphi_A$ et l'angle géométrique instantané réel $\psi_r$, issus des capteurs 16 (azimut et angle attachés à l'aile profilée considérée),

. la vitesse relative V issue de la centrale 14,

. la vitesse de rotation $\omega$ issue des capteurs 16.

A partir de ces valeurs, le calculateur 18 résout pour chaque aile profilée l'équation différentielle (1) en vue de calculer la valeur recherchée de l'angle géométrique instantané $\psi$.

La résolution de cette équation différentielle est effectuée à chaque instant par un calcul présentant les étapes suivantes :

. comparer la valeur mesurée $\varphi$ aux angles de commutation $\varphi_{11}$, $\varphi_{12}$ en vue de déterminer la valeur de $\varphi_i$ par les relations (5),

. utiliser la valeur de $\varphi_i$ et les paramètres mesurés, calculés ou mémorisés C, $\omega$, r, R, pour résoudre ladite équation différentielle par une méthode de RUNGE-KUTTA.

La valeur réelle $\psi_r$ de l'angle géométrique de chaque aile profilée, qui est mesurée par un des capteurs 16, est introduite à chaque instant dans le calculateur 18 pour servir de constante d'intégration.

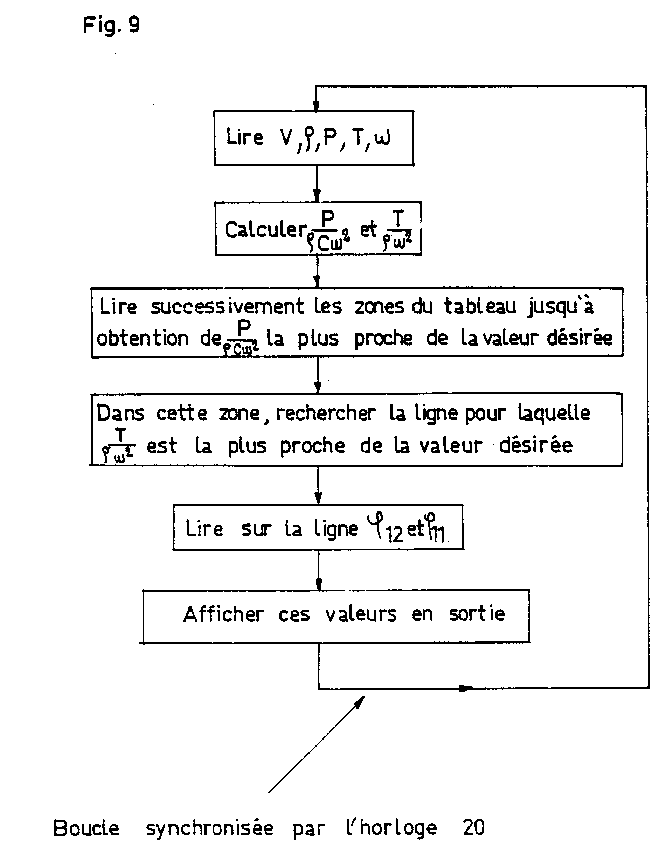

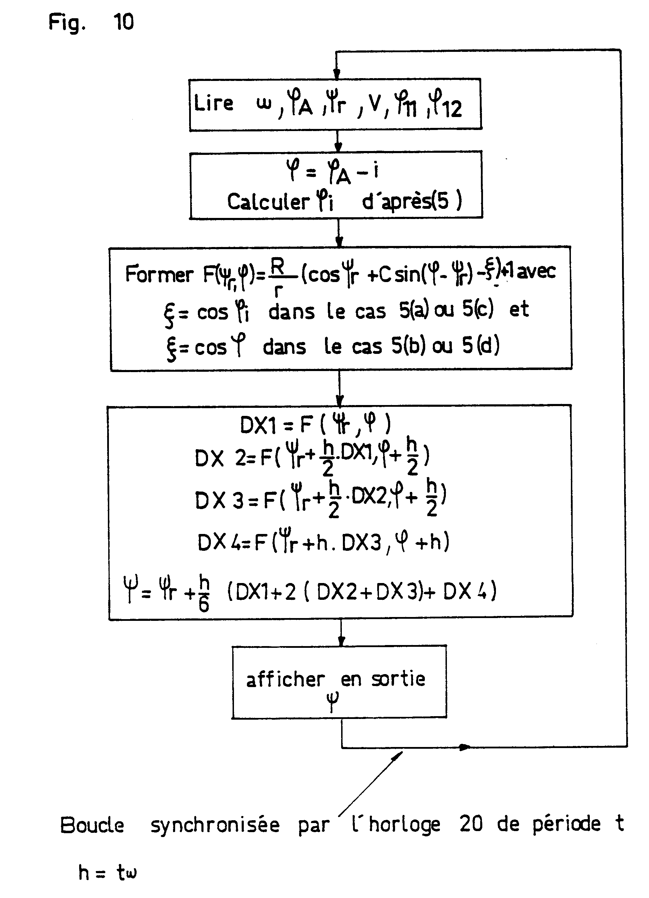

Les logigrammes des figures 9 et 10 illustrent les algorithmes de calcul, mis en oeuvre respectivement dans les calculateurs 17 et 18.

Le programme est exécuté de façon séquentielle grâce à des signaux d'horloge engendrés par une horloge 20 de fréquence élevée par rapport au nombre de tours/seconde du rotor (2 000 hertz par exemple pour des vitesses de rotation rotor de l'ordre de 5 tours/s). A chaque impulsion horloge, les calculateurs 17 et 18 lisent les signaux de consigne et de mesure, puis les calculs sont effectués dans le temps t séparant deux impulsions d'horloge pour déterminer la nouvelle valeur de l'angle géométrique instantané $\psi$ appelé à servir de consigne à l'asservissement.

Le pas angulaire d'intégration h est égal à t$\omega$ qui représente l'accroissement de l'azimut angulaire $\varphi_A$ entre deux impulsions d'horloge.

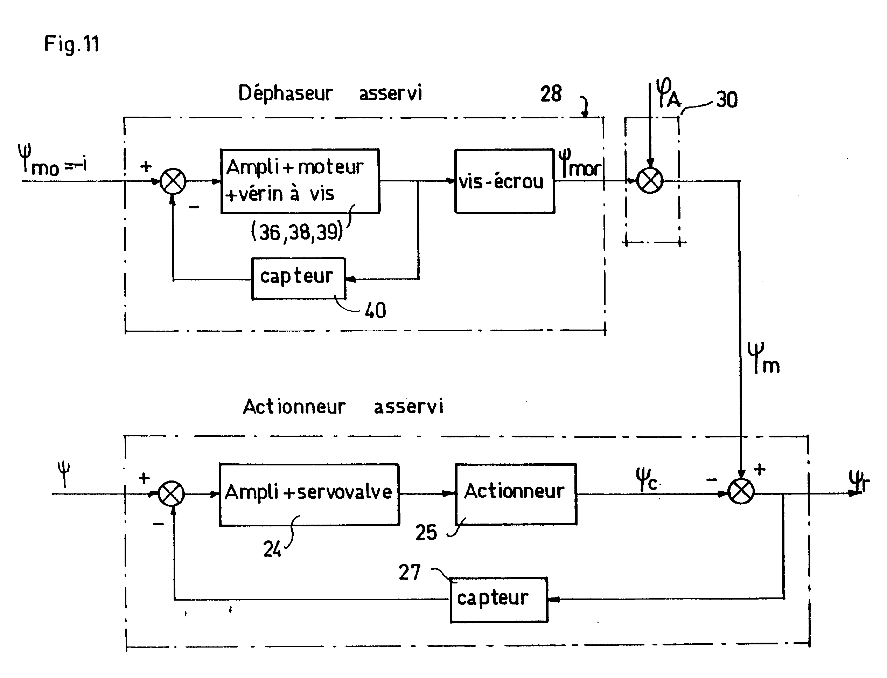

La figure 11 est un diagramme fonctionnel de la boucle d'asservissement fermée associée à chaque aile profilée du rotor qui, à partir de l'angle géométrique instantané $\psi$ issu du calculateur 18 et de l'information de vitesse relative V, commande la position angulaire des ailes profilées de façon à réduire à chaque instant l'écart entre l'angle géométrique instantané calculé $\psi$ et l'angle géométrique instantané réel $\psi_r$.

A cet effet, le mouvement réel de chaque aile profilée (position angulaire $\psi_r$) est obtenu par addition d'un mouvement moyen (angle d'incidence cyclique moyen $\psi_m$) et d'un mouvement complémentaire (angle d'incidence additionnel $\psi_c$).

Le mouvement moyen est assuré par une chaîne cinématique 22 commune à l'ensemble des ailes profilées, dont le calage d'origine $\psi_{mo}$ est assuré par un déphaseur asservi 28. En l'exemple, la loi d'incidence cyclique moyenne est choisie pour correspondre à une translation circulaire de l'aile profilée, cette loi étant donc de la forme : $\psi_m = + \varphi_A + \psi_{mo}$. L'angle $\varphi_A$ est l'azimut aérodynamique de chaque aile profilée et est déterminé au moyen d'un capteur 30 implanté sur le flasque 10 (en regard de la couronne fixe 42 décrite plus loin). En l'exemple décrit, l'angle $\psi_{mo}$ est choisi égal à -i de sorte que l'amplitude crête de l'angle d'incidence additionnel $\psi_c$ soit faible sur un tour. Ceci permet d'utiliser des actionneurs 25 à amplitude de mouvement relativement réduite.

Il est à noter que le capteur 30, constitué notamment par une roue phonique, délivre également un signal représentatif de la vitesse de rotation $\omega$ .

Le mouvement complémentaire est assuré par des moyens hydrauliques 23 associés à chaque aile profilée et comprenant un actionneur hydraulique 25 asservi à la grandeur de consigne $\psi$ .

L'asservissement de l'actionneur hydraulique 25 à la grandeur de consigne $\psi$ est réalisé en boucle fermée de manière à réduire à chaque instant l'écart angulaire $\psi - \psi_r$ où $\psi_r$ est la valeur réelle de l'angle $\psi$ . Cette valeur $\psi_r$ est fournie par un capteur 27 associé à chaque aile profilée ; en l'exemple, comme on le verra plus loin, les capteurs 27 sont des capteurs à roue phonique implantés sur le flasque 10.

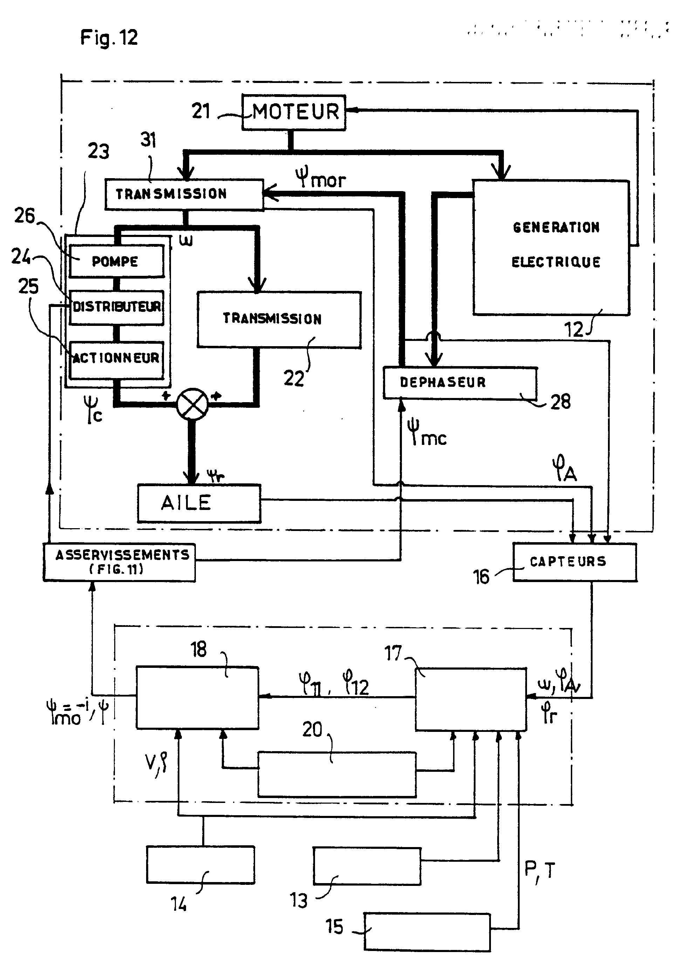

La figure 12 est un schéma synoptique de la chaîne de puissance et d'asservissement du rotor. On a représenté en traits gras sur cette figure les transferts de puissance dans la chaîne cinématique 22 et les moyens hydrauliques 23 et en traits plus fins, les transferts de signaux et de puissance dans les accessoires de puissance, les capteurs et les moyens de calcul. (En 50 a été représentée la génération électrique de type classique).

Le groupe moteur symbolisé en 21 fournit la puissance :

- d'une part, sous forme mécanique par l'entremise de la rotation du rotor, à la chaîne cinématique 22 qui est réversible et commune à l'ensemble des ailes profilées et dont la structure mécanique (détaillée plus loin) est adaptée pour engendrer en sortie une rotation selon la loi d'incidence cyclique moyenne $\psi_m$,
- d'autre part, toujours par l'entremise de la rotation du rotor, aux moyens hydrauliques 23 comprenant des pompes d'alimentation hydraulique 26, un distributeur hydraulique à servo-valve 24 associé à chaque aile profilée et alimenté par les pompes 26, et l'actionneur hydraulique rotatif 25, qui est associé à chaque aile profilée et qui reçoit la puissance du distributeur 24, la structure hydraulique de ces moyens (détaillée plus loin) étant adaptée pour engendrer le mouvement complémentaire $\psi_c$ précité.

Un courant représentatif de l'écart angulaire $\psi - \psi_r$ est délivré vers le distributeur hydraulique 24 de l'aile considérée et celui-ci module la puissance hydraulique reçue des pompes 26 pour engendrer vers l'actionneur correspondant 25 une puissance hydraulique directement liée à la valeur dudit écart, c'est-à-dire un débit fonction directe dudit écart, dans l'exemple d'un actionneur constitué par un vérin rotatif.

Chaque actionneur 25 comprend, d'une part, un corps mobile en rotation 25a entraîné par la chaîne cinématique 22 selon la loi moyenne $\psi_m$, d'autre part, un arbre de sortie 25b couplé à l'aile profilée considérée en vue d'assujettir sa position angulaire.

Ainsi, comme la position angulaire relative de l'arbre 25b par rapport au corps 25a est définie par l'angle $\psi_c$, on réalise au niveau de l'aile profilée la sommation des angles : $\psi_r = \psi_m + \psi_c$.

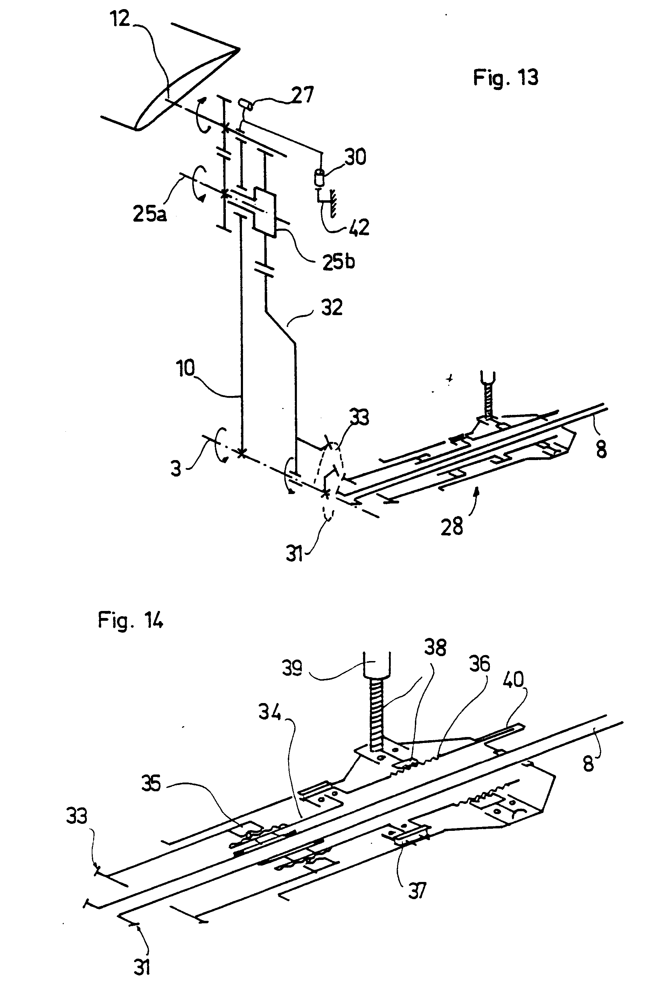

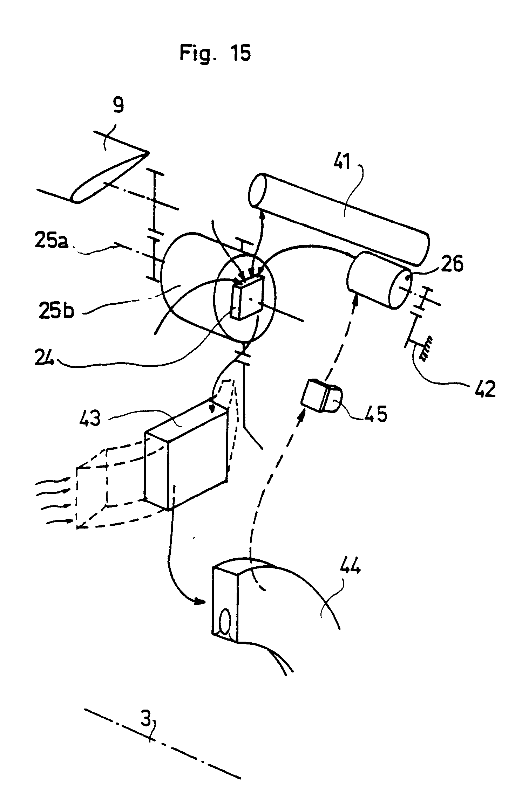

La figure 13 présente le schéma mécanique général de la chaîne cinématique 22, la figure 14 le schéma de détail du déphaseur 28 de cette chaîne et la figure 15 le schéma d'implantation des moyens hydrauliques.

En l'exemple, la chaîne cinématique 22 comprend essentiellement :

- un arbre moteur 8 agencé pour recevoir une puissance motrice d'entraînement du rotor,
- un arbre de rotor 3 agencé selon l'axe de rotation du rotor et couplé par une première transmission 31 à l'arbre moteur 8 en vue d'entraîner le rotor en rotation,
- une roue dentée 32 centrée sur l'arbre du rotor 3 et couplée par une seconde transmission 33 au déphaseur 28, ladite roue dentée entraînant le corps 25a de l'actionneur rotatif associé à chaque aile profilée,
- un flasque 10 de structure-porteuse, lié à l'arbre du rotor 3 et supportant les corps 25a des actionneurs et des axes 12 portant les ailes profilées,
- le déphaseur 28, de nature mécanique, agencé pour assurer un décalage angulaire relatif $\psi_{mo}$ entre la première transmission 31 et la deuxième transmission 33.

Ainsi, le déphaseur agit de façon collective sur le calage de l'ensemble des ailes profilées, cependant que, par l'intermédiaire du flasque 10 et de la roue dentée 32, la chaîne cinématique opère un transfert de puissance mécanique depuis les ailes profilées motrices vers les ailes profilées réceptrices. Cet agencement permet une réalisation compacte et est adapté aux charges transmises.

Par ailleurs, le déphaseur mécanique 28 illustré à titre d'exemple à la figure 14 comprend essentiellement :

- une vis à bille réversible 34 portée par l'arbre moteur 8 pour tourner avec celui-ci et mobile en translation le long de cet arbre moteur,
- un écrou de vis à bille 35 lié à la seconde transmission 33 et coopérant avec la vis à bille 34 de façon à engendrer une rotation dudit écrou liée à la translation de la vis à bille,
- un vérin à vis 36 lié, par l'entremise de butées à bille 37, à la vis à bille 35 en vue de pouvoir la mouvoir le long de l'arbre moteur,
- une vis sans fin 38 couplée au vérin à vis 36 en vue de l'actionner, cette vis sans fin étant dotée d'un moteur de commande de déphasage 39.

Le moteur de commande de déphasage 39 est un moteur électrique qui asservit la position angulaire du déphaseur en fonction de l'angle de calage $\psi_{mo}$ issu des moyens de calcul 29 et de l'angle réel $\psi_{mor}$ déterminé à partir de la mesure d'un capteur 40 implanté sur le déphaseur. Le moteur asservit la position angulaire du déphaseur, en réduisant à chaque instant l'écart angulaire $\psi_{mo} - \psi_{mor}$.

De plus, comme l'illustre la figure 15, le distributeur hydraulique à servovalve 24 qui est associé à chaque aile profilée est relié en l'exemple à deux pompes d'alimentation hydraulique 26 du type à cylindrée variable commandées à pression constante. Chaque pompe est associée à un accumulateur hydraulique 41, de façon que ledit accumulateur soit en charge en cas d'excès de puissance disponible sur la pompe et en restitution dans le cas inverse.

Les pompes au nombre de cinq, agencées pour alimenter chacune deux distributeurs voisins, sont portées par le flasque 10 en vue de tourner avec celui-ci et sont mécaniquement accouplées à une couronne dentée fixe 42 liée à la cellule 1 en vue de l'entraînement en rotation de chacune desdites pompes.

Ce système hydraulique est par ailleurs agencé de façon classique avec des échangeurs de chaleur 43, compacts, fixés sur le flasque 10, une bâche torique pressurisée 44 ainsi qu'un filtre à huile 45. Une telle architecture fournit un système hydraulique apte à fonctionner aux vitesses de rotation du rotor. Pour des raisons de fiabilité, chaque distributeur 24 est composé de deux organes de distribution redondants, modulant chacun la puissance fournie par la génération hydraulique qui lui est associée. L'agencement des pompes autour du flasque 10 autorise un entraînement de celles-ci aux vitesses requises (de l'ordre de 3 500 tours/minute) à partir de la rotation beaucoup plus lente du rotor.

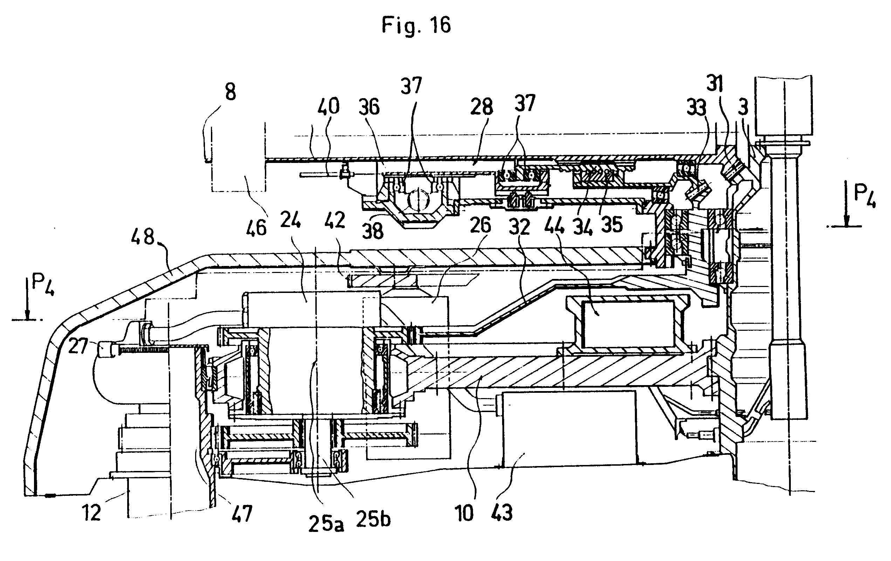

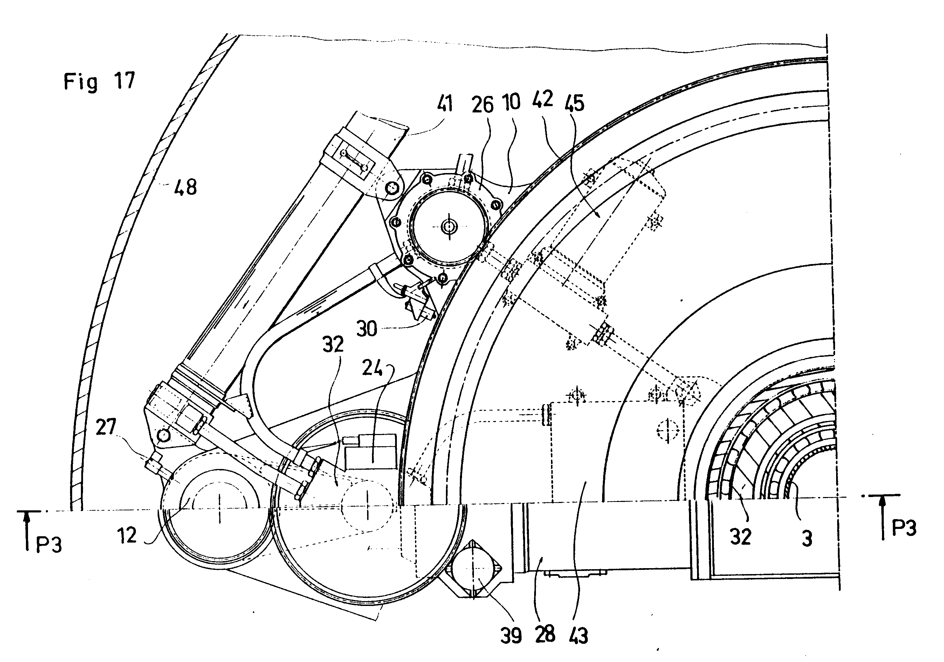

La figure 16 est une section partielle du rotor selon un plan longitudinal $P_3$ passant par l'axe du rotor 3, par l'axe moteur 8 et par l'axe 12 d'une aile profilée, le rotor étant supposé dans une position angulaire telle que ces trois axes soient coplanaires. La figure 17 est une coupe orthogonale à la précédente selon une ligne brisée $P_4$.

On retrouve sur ces figures :

. l'arbre du rotor 3 qui est creux et doté de structures en creux et reliefs pour supporter et lier les divers ensembles,

. l'arbre moteur 8 qui est orthogonal au premier et lui-même creux et qui reçoit la puissance motrice du groupe moteur par l'entremise d'un accouplement flexible symbolisé en 46,

. l'axe 12 de l'aile profilée concernée,

. la seconde transmission 33 constituée par un couple de pignons,

. le déphaseur 28 monté entre les pignons 33 et l'arbre moteur 8 avec sa vis à billes 34, son écrou de vis à billes 35, son vérin à vis 36, ses butées à billes 37, sa vis sans fin 38, son capteur 40 permettant de déterminer l'angle de calage $\psi_{mor}$, le moteur de commande 39,

. la première transmission 31 de la chaîne cinématique constituée par un couple de pignons,

. la roue dentée 32 couplée par les pignons 33 à l'écrou à bille 35 du déphaseur,

. le flasque 10 constituent la structure porteuse du rotor, côté cellule, solidarisé à l'arbre du rotor 3,

. l'actionneur 25 constitué par un vérin rotatif composé d'un corps 25a qui engrène sur la roue dentée 32, et d'un arbre 25b,

. un couple d'engrenages 47 monté entre cet arbre 25b d'actionneur et l'axe 12 de l'aile profilée,

. le distributeur 24 hydrauliquement connecté au vérin 25 par un raccord tournant et maintenu par palier sur le corps du vérin 25a,

. une des deux pompes hydrauliques 26, associée à l'aile profilée concernée, supportée par le flasque 10 et engrenant sur la couronne dentée fixe 42, ladite pompe étant reliée au distributeur 24,

. l'accumulateur hydraulique 41 associé à la pompe 26, supporté par le flasque 10 et hydrauliquement relié au distributeur 24,

. l'échangeur thermique 43, supporté par le flasque 10 et disposé sur le retour du circuit hydraulique,

. la bâche pressurisée 44, en l'exemple de forme torique, supportée par le flasque 10,

. le filtre 45 disposé sur le circuit de la pompe 26,

. le capteur 27 mesurant l'angle géométrique instantané réel $\psi_r$,

. le capteur 30 de mesure de l'azimut aérodynamique $\varphi$ ,

. un carter fixe 48 de protection assurant la rétention d'huile de lubrication, cette lubrification étant effectuée par jet d'huile haute pression à l'aide de moyens classiques non représentés.

La transmission des informations électriques issues des capteurs, des ordres électriques à destination des actionneurs, et des alimentations des capteurs s'effectue de façon connue en soi par un collecteur tournant monté en sortie de l'arbre du rotor 3, cette transmission assurant la connection vers les moyens électroniques correspondants embarqués dans la cellule 1 (calculateurs 17, 18 et 29 et sources d'alimentation électrique).


**Revendications**

1. Procédé de pilotage d'un rotor lié à une cellule mobile dans un fluide, en vue d'exercer à chaque instant sur ladite cellule des efforts sustentateurs et/ou propulsifs désirés, ledit rotor comprenant une structure-porteuse (5, 10, 11) montée sur ladite cellule (1) de façon à pouvoir être entraîné en rotation autour d'un axe de rotation (O) et au moins une aile profilée (9) s'étendant parallèlement à l'axe de rotation (O) et articulée sur la structure-porteuse par une liaison-pivot d'axe (B) sensiblement parallèle audit axe de rotation (O), ledit procédé de pilotage étant du type dans lequel l'on amène le rotor à tourner dans le fluide autour de l'axe de rotation (O) à une vitesse de rotation ($\omega$), et étant caractérisé en ce qu'il consiste :

- à mémoriser préalablement des données représentatives des paramètres structurels suivants du rotor : nE (envergure équivalente égale au produit du nombre d'ailes profilées n du rotor par l'envergure E de chaque aile profilée) ; R (distance entre l'axe de rotation O et l'axe B de la liaison pivot) ; r (distance sur la corde de l'aile profilée entre l'axe B et un point P situé sensiblement au quart arrière du profil) ; a (coefficient de la transformation conforme de l'aile profilée) ; $A = 2\pi(a_1 - a^2) + S$ ; $B = 2\pi(a_1$

+ a² - S) ; $C_1 = 2\pi(\frac{a_1a_2}{a^2} + \frac{a_2a_3}{a^4})$ - $\pi$ (A$_{-1}$ - a$_1$A$_1$ - 2a$_2$A$_2$ - 3a$_3$A$_3$...), où a$_1$, a$_2$... a$_i$ sont les termes de la transformation conforme développée en série de Laurent, A$_{-1}$, A$_1$,... A$_i$ les termes du produit de la transformation conforme et de sa conjuguée développée en série de Laurent et S la surface normale du profil,

- à mesurer et déterminer à chaque instant la vitesse relative (V) de déplacement de la cellule par rapport au fluide, la vitesse de rotation ω du rotor et la masse volumique ρ du fluide à partir de mesures de pression dynamique, de pression statique et de température de fluide,

- à mesurer et déterminer en permanence au cours de la rotation, l'azimut aérodynamique φ de chaque aile profilée pour engendrer un signal de mesure correspondant, ledit azimut aérodynamique étant l'angle algébrique formé, d'une part, par la direction du vent relatif et, d'autre part, par le plan M contenant l'axe de rotation (O) et l'axe (B) de la liaison-pivot de l'aile profilée considérée,

- à engendrer des signaux de consigne représentatifs des efforts désirés sur la cellule (efforts algébriques traduits par leurs projections P et T respectivement selon une direction perpendiculaire au vent relatif et selon la direction du vent relatif),

- à déterminer en permanence, pour chaque aile profilée, à partir des paramètres mémorisés, des grandeurs mesurées et déterminées, et des signaux de consigne, l'angle géométrique instantané ψ défini par la corde de l'aile profilée et par le plan M répondant à $\mp$ 0,2 radian près aux relations suivantes (tous les angles étant définis dans le sens trigonométrique) :

$$(1) \qquad \cos\varphi_l = C \sin(\varphi - \psi) + \cos\psi + \frac{r}{R\omega}(\omega - \frac{d\psi}{dt})$$

$$(2) \qquad P = \frac{n\varepsilon}{2\eta}\int_0^{2\eta} -\rho\left\{[\Gamma - B(\omega - \frac{d\psi}{dt})]m - C_1(\omega - \frac{d\psi}{dt})^2 - A\frac{dl}{dt}\right\}\sin(\varphi-\psi)\cdot d\varphi$$

$$+ \frac{n\varepsilon}{2\eta}\int_0^{2\eta} \rho\left\{[\Gamma + A(\omega - \frac{d\psi}{dt})]l + C_1\frac{d^2\psi}{dt^2} - B\frac{dm}{dt}\right\}\cos(\varphi-\psi)\cdot d\varphi$$

$$(3) \qquad T = \frac{n\varepsilon}{2\eta}\int_0^{2\eta} -\rho\left\{[\Gamma - B(\omega - \frac{d\psi}{dt})]m - C_1(\omega - \frac{d\psi}{dt})^2 - A\frac{dl}{dt}\right\}\cos(\varphi-\psi)\cdot d\varphi$$

$$+ \frac{n\varepsilon}{2\eta}\int_0^{2\eta} -\rho\left\{[\Gamma + A(\omega - \frac{d\psi}{dt})]l + C_1\frac{d^2\psi}{dt^2} - B\frac{dm}{dt}\right\}\sin(\varphi-\psi)\cdot d\varphi$$

avec

$$(4) \qquad O \leqq \varphi_{11} \leqq \varphi_{12} \leqq \pi$$

$$(5) \quad (a) \quad \varphi_i = \varphi_{11} \quad et \quad \Gamma = 4\pi a R\omega \cos\varphi_{11} \quad si \quad -\varphi_{11} < \varphi < \varphi_{11}$$

$$(b) \quad \varphi_i = \varphi \quad et \quad \Gamma = 4\pi a R\omega \cos\varphi \quad si \quad \varphi_{11} \leqq \varphi < \varphi_{12}$$

$$(c) \quad \varphi_i = \varphi_{12} \quad et \quad \Gamma = 4\pi a R\omega \cos\varphi_{12} \quad si \quad \varphi_{12} < \varphi < 2\eta - \varphi_{12}$$

$$(d) \quad \varphi_i = \varphi \quad et \quad \Gamma = 4\pi a R\omega \cos\varphi \quad si \quad 2\eta - \varphi_{12} \leqq \varphi \leqq 2\eta - \varphi_{11}$$

$$(6) \qquad I = - R\omega [\sin\psi + C \cos(\varphi - \psi)]$$

$$(7) \qquad m = R\omega [\cos\psi + C \sin(\varphi - \psi)] - \frac{r}{2}(\omega - \frac{d\psi}{dt})$$

et

11

$$(8) \qquad c = \frac{V}{\omega R}$$

- et à asservir l'angle géométrique instantané de chaque aile profilée à la valeur de l'angle obtenu $\psi$ pour ladite aile.

2. Procédé de pilotage selon la revendication 1, caractérisé en ce que l'on détermine l'angle géométrique instantané $\psi$ par les opérations suivantes :

- pour l'ensemble des ailes profilées :

. détermination préalable d'une table de correspondance de valeurs entre les paramètres $\varphi_{11}$, $\varphi_{12}$, et les grandeurs $\frac{P}{C\omega^2\rho}$ et $\frac{T}{\omega^2\rho}$ , cette table étant déterminée en affectant aux paramètres $\varphi_{11}$, $\varphi_{12}$ (dits angles de commutation), des valeurs discrètes s'échelonnant sur la plage de variation (4) et en calculant pour chaque couple de valeurs ($\varphi_{11}$, $\varphi_{12}$) les valeurs de $\frac{P}{C\omega^2\rho}$ et $\frac{T}{\omega^2\rho}$ solutions des relations (2), (3),

. mémorisation de ladite table de correspondance,

. calcul en permanence des grandeurs $C = \frac{V}{\omega\rho}$, $\frac{P}{C\omega^2\rho}$ et $\frac{T}{\omega^2\rho}$ en fonction des efforts P et T désirés et des paramètres V, $\omega$ et $\rho$ déterminés,

. exploration de la table de correspondance pour retrouver le couple $\frac{P}{C\omega^2\rho}$ , $\frac{T}{\omega^2\rho}$ le plus proche des grandeurs correspondantes calculées et extraction des valeurs des paramètres $\varphi_{11}$, $\varphi_{12}$ correspondants,

- pour chaque aile profilée :

. résolution de l'équation différentielle (1), en donnant aux paramètres $\varphi_{11}$, $\varphi_{12}$ les valeurs extraites de la table, en vue d'obtenir la valeur recherchée de l'angle géométrique instantané $\psi$ concernant l'aile profilée considérée.

3. Procédé de pilotage selon la revendication 2, caractérisé en ce que, pour l'ensemble des ailes profilées :

. la table de correspondance est mémorisée sous forme d'une matrice à quatre colonnes correspondant aux valeurs de $\frac{P}{C\omega^2\rho}$ , $\frac{T}{\omega^2\rho}$, $\varphi_{11}$, $\varphi_{12}$,

. l'exploration de ladite table de correspondance consiste à lire les deux colonnes $\frac{P}{C\omega^2\rho}$ , $\frac{T}{\omega^2\rho}$ en vue d'identifier le couple le plus proche des grandeurs calculées et à extraire les valeurs correspondantes de $\varphi_{11}$ et $\varphi_{12}$ dans les deux autres colonnes.

4. Procédé de pilotage selon l'une des revendications 2 ou 3, caractérisé en ce que, pour chaque aile profilée, la résolution de l'équation différentielle (1) est effectuée à chaque instant par un calcul présentant les étapes suivantes :

. comparer la valeur mesurée $\varphi$ aux angles de commutation $\varphi_{11}$, $\varphi_{12}$ en vue de déterminer la valeur de $\varphi_i$ par les relations (5),

. utiliser la valeur de $\varphi$ , de $\varphi_i$ et les paramètres mesurés, calculés ou mémorisés C, $\omega$, r, R, pour résoudre ladite équation différentielle par une méthode de RUNGE-KUTTA.

5. Procédé de pilotage selon l'une des revendications 2, 3 ou 4, caractérisé en ce que l'on mesure en permanence la valeur réelle $\psi_r$ de l'angle géométrique instantané de chaque aile profilée et en ce que l'on introduit cette valeur réelle dans le calculateur en vue de servir de constante d'intégration dans la résolution de l'équation différentielle.

6. Procédé de pilotage selon l'une des revendications précédentes, caractérisé en ce que la détermination de l'angle géométrique instantané $\psi$ est réalisée, en permanence, de façon séquentielle en engendrant des impulsions d'horloge de fréquence élevée par rapport au nombre de tours/seconde du rotor, en lisant les signaux de mesure et de consigne à chaque impulsion d'horloge et, entre deux impulsions d'horloge, en effectuant les calculs pour déterminer la valeur de l'angle géométrique instantané $\psi$ .

7. Procédé de pilotage selon l'une des revendications précédentes, caractérisé en ce que l'asservissement de l'angle géométrique instantané de chaque aile profilée consiste :

. à assurer un asservissement moyen de l'ensemble de ailes profilées selon une loi d'incidence cycli-

que moyenne $\psi_m$ = f ($\varphi$) par une chaîne cinématique réversible apte à fournir ou récupérer de l'énergie selon les caractéristiques de charge des ailes profilées,

. à assurer un asservissement complémentaire de chaque aile profilée, à partir de la valeur calculée de l'angle géométrique instantané $\psi$, en ajoutant à chaque instant une incidence additionnelle $\psi_c = \psi$ - $\psi_m$ au moyen d'un actionneur.

8. Rotor destiné à être mis en rotation dans un fluide en vue de développer sur une cellule (1) des efforts sustentateurs et/ou propulsifs désirés (P, T), comprenant une membrure-porteuse (5, 10, 11) adaptée pour être montée sur la cellule de façon à pouvoir être entraîné en rotation autour d'un axe de rotation (O) et au moins une aile profilée (9) s'étendant parallèlement à l'axe de rotation (O) et articulée sur la membrure-porteuse par une liaison-pivot d'axe (B) sensiblement parallèle à l'axe de rotation (O), ledit rotor étant caractérisé en ce qu'il comprend :

. des moyens (13) de mémorisation de données spécifiques du rotor,

. des moyens (14, 30) de mesure et de détermination de la vitesse relative (V) de déplacement de la cellule, de la vitesse de rotation ($\omega$) du rotor et de la masse volumique du fluide ($\rho$),

. des moyens (14, 30) de mesure et de détermination de l'azimut aérodynamique ($\varphi$) de chaque aile profilée au cours de la rotation,

. des moyens (15) de génération de signaux de consigne représentatifs d'efforts désirés (P, T),

. des moyens (17, 18) de calcul de l'angle géométrique instantané ($\psi$) de chaque aile profilée en fonction des données mémorisées, des valeurs déterminées et des signaux de consigne,

. des moyens (22, 23, 28) d'asservissement de chaque aile profilée, adaptés pour asservir à chaque instant la position angulaire de l'aile à la valeur ($\psi$) calculée issue des moyens de calcul.

9. Rotor selon la revendication 8, caractérisé en ce qu'il comprend un capteur (27) de mesure de la valeur réelle $\psi_r$ de l'angle géométrique instantané de chaque aile profilée, les moyens d'asservissement étant de type en boucle fermée, adaptés pour recevoir la valeur réelle $\psi_r$ et un paramètre lié à la valeur calculée $\psi$ et assurer un asservissement de position angulaire de l'aile profilée considérée tendant à réduire à chaque instant l'écart angulaire $\psi - \psi_r$.

10. Rotor selon la revendication 9, caractérisé en ce que les moyens d'asservissement comprennent :

- une chaîne cinématique (22), commune à l'ensemble des ailes profilées (9) et de structure mécanique adapté pour engendrer en sortie une rotation selon une loi d'incidence cyclique moyenne $\psi_m$,

- un distributeur hydraulique à servo-valve (24), associé à chaque aile profilée, ledit distributeur recevant un signal représentatif de l'écart angulaire $\psi - \psi_r$ pour l'aile profilée considérée et étant adapté pour engendrer une puissance hydraulique directement liée audit écart angulaire,

- et un actionneur hydraulique rotatif (25) associé à chaque aile profilée et recevant la puissance hydraulique du distributeur (24) correspondant, ledit actionneur comprenant, d'une part, un corps mobile en rotation (25a) entraîné par la chaîne cinématique (22) selon la loi moyenne $\psi_m$, d'autre part, un arbre de sortie (25b) couplé à l'aile profilée considérée en vue d'assujettir la position angulaire $\psi$ de celle-ci.

11. Rotor selon la revendication 10, caractérisé en ce que la chaîne cinématique (22) précitée comprend un déphaseur (28) adapté pour permettre un calage déterminé de l'origine de la loi d'incidence cyclique $\psi_m$.

12. Rotor selon la revendication 11, caractérisé en ce que la chaîne cinématique comprend :

- un arbre moteur (8) agencé pour recevoir une puissance motrice d'entraînement du rotor,

- un arbre de rotor (3) agencé selon l'axe de rotation du rotor et couplé par une première transmission (31) à l'arbre moteur (8) en vue d'entraîner le rotor en rotation,

- une roue dentée (32) centrée sur l'arbre du rotor (3) et couplée par une seconde transmission (33) au déphaseur (28), ladite roue dentée entraînant le corps (25a) de l'actionneur rotatif associé à chaque aile profilée,

- un flasque (10) de structure-porteuse, lié à l'arbre du rotor (3) et supportant les corps (25a) des actioneurs et des axes (12) portant les ailes profilées,

- le déphaseur (28), de nature mécanique, agencé pour assurer un décalage angulaire relatif $\psi_{mo}$ entre la première transmission (31) et la deuxième transmission (33).

13. Rotor selon la revendication 12, caractérisé en ce que le déphaseur mécanique comprend :

- une vis à bille réversible (34) portée par l'arbre moteur (8) pour tourner avec celui-ci et mobile en translation le long de cet arbre-moteur,

- un écrou de vis à bille (35) lié à la seconde transmission (33) et coopérant avec la vis à bille (34) de façon à engendrer une rotation dudit écrou liée à la translation de la vis à bille,
- un vérin à vis (36) lié, par l'entremise de butées à bille (37) à la vis à bille (35) en vue de pouvoir la mouvoir le long de l'arbre moteur,
- une vis sans fin (38) couplée au vérin à vis (36) en vue de l'actionner, cette vis sans fin étant dotée d'un moteur de commande de déphasage (39).

14. Rotor selon l'une des revendications 10, 11, 12 ou 13, caractérisé en ce que le distributeur hydraulique à servo-valve (24) associé à chaque aile profilée (9) est relié à au moins une pompe d'alimentation hydraulique (26) associée à un accumulateur hydraulique (41), agencés de façon que ledit accumulateur hydraulique soit en charge en cas d'excès de puissance disponible sur la pompe et en restitution dans le cas inverse.

15. Rotor selon la revendication 14, caractérisé en ce que les pompes d'alimentation hydraulique (26) sont portées par la structure-porteuse (10) en vue de tourner avec celle-ci et sont mécaniquement accouplées à une couronne dentée fixe (42) en vue de l'entraînement en rotation de chacune desdites pompes.

16. Rotor selon l'une des revendications 8 à 15, caractérisé en ce que :
. les ailes profilées (9) sont articulées sur deux flasques (10, 11) situés de part et d'autre, constituant la structure-porteuse précitée,
. lesdits flasques sont reliés par l'arbre de rotor (3) et couplés en rotation avec celui-ci,
. chaque aile profilée (9) est portée de part et d'autre par des axes (12), maintenus par les flasques (10, 11) et accouplés en rotation à une transmission (47), elle-même accouplée à l'actionneur hydraulique (25) associé à l'aile considérée.

17. Rotor selon l'une des revendications 8 à 16, comprenant cinq ailes profilées (9) réparties autour de l'arbre de rotation (3) dudit rotor.

18. Rotor selon l'une des revendications 8 à 17, monté sur une cellule d'aéronef (1), dans lequel l'arbre de rotor (3) est, d'un côté, porté par un moyeu (4) lié à la cellule de l'aéronef et de l'autre côté, soutenu par une membrure profilée fixe (5) dotée d'un palier, ladite membrure revenant se rattacher à la cellule.

19. Aéronef comprenant au moins un rotor conforme à la revendication 18 et un groupe moteur intégré à sa cellule et couplé à l'arbre moteur (8) de chaque rotor.


## Patentansprüche

1. Verfahren zur Steuerung eines mit einer in einem Fluid beweglichen Zelle verbundenen Rotors zwecks Ausübung der gewünschten Auftriebs- und/oder Vortriebskräfte auf die besagte Zelle in jedem Augenblick, wobei der besagte Rotor eine auf der besagten Zelle (1) angeordnete Tragstruktur (5, 10, 11) umfaßt, so daß er in Drehung um eine Rotationsachse (O) angetrieben werden kann, sowie mindestens ein profiliertes Blatt (9), das sich parallel zu der Rotationsachse (O) erstreckt und mit Hilfe eines Anschlußgelenks mit Achse (B), die im wesentlichen parallel zu der besagten Rotationsachse (O) verläuft, an der Tragstruktur angelenkt ist, und zwar ist das besagte Steuerverfahren der Art, bei der man den Rotor in dem Fluid zum Drehen um Rotationsachse (O) mit einer Rotationsgeschwindigkeit ($\omega$) veranlaßt, und dadurch gekennzeichnet, daß es in folgenden Stufen besteht:
- im Vorspeichern von Daten, die für die folgenden Strukturparameter des Rotors repräsentativ sind: nE (äquivalente Spannweite gleich dem Produkt der Anzahl n profilierter Rotorblätter mit Spannweite E jedes profilierten Blattes); R (Abstand zwischen Rotationsachse O und Achse B des Anschlußgelenks); r (Abstand entlang der Sehne des profilierten Blattes zwischen Achse B und einem Punkt P, der im wesentlichen im hinteren Viertel des Profils liegt); a (Koeffizient der konformen Transformation des profilierten Blattes); $A = 2\pi(a_1 - a^2) + S$
$$B = 2\pi(a_1 + a^2 - S); \quad C_1 = 2\pi(\frac{a_1a_2}{a^2} + \frac{a_2a_3}{a^4}) - \pi(A_{-1} - a_1A_1 - 2a_2A_2 - 3a_3A_3..)$$
wobei $a_1$, $a_2$ ... $a_l$ die Glieder der nach Laurents Serie entwickelten konformen Transformation und $A_{-1}$, $A_1$ ... $A_l$ die Glieder des Produktes der konformen Transformation und deren nach Laurents Serie entwickelten Konjugierten sind, und S die Normaloberfläche des Profils ist,
- im Messen und Bestimmen in jedem Augenblick der relativen Geschwindigkeit (V) der Verlagerung der Zelle im Verhältnis zu dem Fluid, der Rotationsgeschwindigkeit $\omega$ des Rotors und der Dichte $\rho$ des Fluids aufgrund von Meßwerten des dynamischen Drucks, des statischen Drucks und der Fluidtemperatur,

- während der Rotation im laufenden Messen und Bestimmen des aerodynamischen Azimut $\varphi$ jedes profilierten Blattes, um ein entsprechendes Meßsignal zu erzeugen, wobei das besagte aerodynamische Azimut der algebraische Winkel ist, der einerseits durch die Richtung des Fahrtwinds und andererseits durch die Ebene M gebildet wird, die Rotationsachse (O) und Achse (B) des Anschlußgelenks des betreffenden profilierten Blattes enthält,

- im Erzeugen von für die Nennkräfte an der Zelle (algebraische Kräfte, wiedergegeben durch ihre Projektionen P und T in zu dem Fahrtwind lotrechter Richtung bzw. in Richtung des Fahrtwinds) repräsentativen Sollsignalen,

- im laufenden Bestimmen hinsichtlich jedes profilierten Blattes, aufgrund der gespeicherten Parameter, der gemessenen und bestimmten Größen und der Sollsignale, des momentanen geometrischen Winkels $\psi$ definiert durch die Sehne des profilierten Blattes und durch die Ebene M entsprechend den folgenden Beziehungen innerhalb von $\mp 0,2$ Radianten (wobei alle Winkel im trigonometrischen Sinne definiert sind) :

$$(1) \qquad \cos \varphi_i = C \sin(\varphi - \psi) + \cos \psi \, \frac{r}{Rw} \left( \omega - \frac{d\psi}{dt} \right)$$

$$(2) \quad P = \frac{nE}{2\pi} \int_0^{2\pi} - \rho \left\{ [\Gamma - B(\omega - \frac{d\psi}{dt})]m - C_1(\omega - \frac{d\psi}{dt})^2 - A \, \underline{dl} \right\} \sin (\varphi - \psi) . \, d\varphi$$

$$+ \frac{nE}{2\pi} \int_0^{2\pi} \rho \left\{ [\Gamma + A(\omega - \frac{d\psi}{dt})] 1 + C_1 \frac{d^2\psi}{dt^2} - B \, \underline{dm} \right\} \cos (\varphi - \psi) . \, d\varphi$$

$$(3) \quad T = \frac{nE}{2\pi} \int_0^{2\pi} - \rho \left\{ [\Gamma - B(\omega - \frac{d\psi}{dt})]m - C_1(\omega - \frac{d\psi}{dt})^2 - A \, \underline{dl} \right\} \cos (\varphi - \psi) . \, d\varphi$$

$$+ \frac{nE}{2\pi} \int_0^{2\pi} - \rho \left\{ [\Gamma + A(\omega - \frac{d\psi}{dt})] 1 + C_1 \frac{d^2\psi}{dt^2} - B \, \underline{dm} \right\} \sin (\varphi - \psi) . \, d\varphi$$

bei

$$(4) \qquad O \leqq \varphi_{11} \leqq \varphi_{12} \leqq \pi$$

(5) (a) $\varphi_i = \varphi_{11}$ und $\Gamma = 4\pi aR\omega \cos \varphi_{11}$ wenn $-\varphi_{11} < \varphi < \varphi_{11}$ ist

(b) $\varphi_i = \varphi$ und $\Gamma = 4\pi aR\omega \cos \varphi$ wenn $\varphi_{11} \leq \varphi < \varphi_{12}$ ist

(c) $\varphi_i = \varphi_{12}$ und $\Gamma = 4\pi aR\omega \cos \varphi_{12}$ wenn $\varphi_{12} < \varphi < 2\pi - \varphi_{12}$ ist

(d) $\varphi_i = \varphi$ und $\Gamma = 4\pi aR\omega \cos \varphi$ wenn $2\pi - \varphi_{12} \leq \varphi \leq 2\pi - \varphi_{11}$ ist

$$(6) \qquad l = -R\omega [\sin \psi + C \cos (\varphi - \psi)]$$

$$(7) \qquad m = R\omega [\cos \psi + C \sin(\varphi - \psi)] - \frac{r}{2}(\omega - \frac{d\psi}{dt})$$

und

$$(8) \qquad C = \frac{V}{\omega R}$$

- und im Einstellen des momentanen geometrischen Winkels jedes profilierten Blattes im Einklang mit dem Wert des hinsichtlich des besagten Blattes gewonnenen Winkels $\psi$.

2. Steuerverfahren nach Anspruch 1, dadurch gekennzeichnet, daß man den momentanen geometrischen Winkel $\psi$ durch die folgenden Schritte bestimmt:

- für die Gesamtheit der profilierten Blätter :

. Vorausbestimmung einer Korrelationstafel von Werten zwischen den Parametern $\varphi_{11}$, $\varphi_{12}$ und den Größen $\frac{P}{C\omega^{2\rho}}$ und $\frac{T}{\omega^{2\rho}}$, wobei diese Tafel dadurch bestimmt wird, daß man den Parametern $\varphi_{11}$, $\varphi_{12}$ (den sogenannten Kommutationswinkeln) getrennte, über den Variationsbereich (4) gleichmäßig verteilte Werte zuteilt und für jedes Wertepaar ($\varphi_{11}$, $\varphi_{12}$) die Werte von $\frac{P}{C\omega^{2\rho}}$ und $\frac{T}{\omega^{2\rho}}$ Lösungen der Beziehungen (2), (3) berechnet,

. Speicherung der besagten Korrelationstafel,

. laufende Berechnung der Größen $C = \frac{V}{\omega^\rho}$ , $\frac{P}{C\omega^{2\rho}}$ und $\frac{T}{\omega^{2\rho}}$ in Abhängigkeit von den Nennkräften P und T und den bestimmten Parametern V, $\omega$ und $\rho$,

. Absuchung der Korrelationstafel zwecks Bestimmung des Paares $\frac{P}{C\omega^{2\rho}}$ , $\frac{T}{\omega^{2\rho}}$ , das den entsprechenden berechneten Größen am nächsten ist, und Auszug der entsprechenden Werte der Parameter $\varphi_{11}$, $\varphi_{12}$,

- für jedes profilierte Blatt :

. Auflösung der Differentialgleichung (1), wobei den Parametern $\varphi_{11}$, $\varphi_{12}$ die aus der Tafel entnommenen Werte zugeteilt werden, um den gewünschten Wert des momentanen geometrischen Winkels $\psi$ für das betreffende profilierte Blatt zu erhalten.

3. Steuerverfahren nach Anspruch 2, dadurch gekennzeichnet, daß für die Gesamtheit der profilierten Blätter

. die Korrelationstafel in der Form einer Matrix mit vier den Werten von $\frac{P}{C\omega^{2\rho}}$, $\frac{T}{\omega^{2\rho}}$ , $\varphi_{11}$, $\varphi_{12}$ entsprechenden Korrelationen gespeichert wird,

. Absuchung der besagten Korrelationstafel im Lesen der zwei Kolonnen $\frac{P}{C\omega^{2\rho}}$ , $\frac{T}{\omega^{2\rho}}$ besteht, um das den berechneten Größen am nächsten befindliche Paar zu bestimmen, sowie im Auszug der entsprechenden Werte von $\varphi_{11}$ und $\varphi_{12}$ in den beiden anderen Kolonnen.

4. Steuerverfahren nach einem der Ansprüche 2 oder 3, dadurch gekennzeichnet, daß hinsichtlich jedes profilierten Blattes die Auflösung der Differentialgleichung (1) in jedem Augenblick durch eine Berechnung bewirkt wird, die die folgenden Stufen umfaßt:

. Vergleich des gemessenen Wertes $\varphi$ mit den Kommutationswinkeln $\varphi_{11}$, $\varphi_{12}$ zwecks Bestimmung des Wertes von $\varphi_i$ im Einklang mit den Beziehungen (5),

. Verwendung des Wertes von $\varphi$, $\varphi_i$ und den gemessenen, berechneten oder gespeicherten Parametern C, $\omega$, r, R, zwecks Lösung der besagten Differentialgleichung nach einer Methode von RUNGE-KUTTA.

5. Steuerverfahren nach einem der Ansprüche 2, 3 oder 4, dadurch gekennzeichnet, daß man laufend den Istwert $\psi_r$ des momentanen geometrischen Winkels jedes profilierten Blattes mißt und diesen Istwert in den Computer eingibt, so daß er bei der Auflösung der Differentialgleichung als Integrationskonstante dient.

6. Steuerverfahren nach einem der vorstehenden Ansprüche, dadurch gekennzeichnet, daß die Bestimmung des momentanen geometrischen Winkels $\psi$ laufend in sequentieller Form durchgeführt wird, indem Zeitgeberimpulse, deren Frequenz im Verhältnis zu der Anzahl von Umdrehungen pro Sekunde des Rotors hoch ist, erzeugt, die Meß- und Sollsignale zu jedem Zeitgeberimpuls gelesen und zwischen zwei Zeitgeberimpulsen die Berechnungen zur Bestimmung des Wertes des momentanen geometrischen Winkels $\psi$ durchgeführt werden.

7. Steuerverfahren nach einem der vorstehenden Ansprüche, dadurch gekennzeichnet, daß die Regelung des momentanen geometrischen Winkels jedes profilierten Blattes in den folgenden Stufen besteht:
   . im Gewährleisten einer mittleren Regelung der Gesamtheit profilierter Blätter im Einklang mit einem Gesetz der mittleren periodischen Änderung des Anstellwinkels $\psi_m = f (\varphi)$ durch eine umkehrbare kinematische Kette, die in der Lage ist, Energie je nach dem Belastungsmerkmal der profilierten Blätter zu liefern oder zu gewinnen,
   . im Gewährleisten einer komplementären Regelung jedes profilierten Blattes aufgrund des berechneten Wertes des momentanen geometrischen Winkels $\psi$ durch Hinzufügen in jedem Augenblick eines zusätzlichen Anstellwinkels $\psi c = \psi - \psi_m$ mit Hilfe eines Stellantriebs.

8. Rotor für drehenden Einsatz in einem Fluid zwecks Entwicklung der gewünschten Auftriebs- und/oder Antriebskräfte (P, T) auf eine Zelle (1), umfassend eine Tragstruktur (5, 10, 11), die zur Anordnung an der Zelle geeignet ist, so daß sie drehend um eine Rotationsachse (O) angetrieben werden kann, und mindestens ein profiliertes Blatt (9), das parallel zur Rotationsachse (O) verläuft und mit Hilfe eines Anschlußgelenks an der Tragstruktur angelenkt ist, wobei das besagte Anschlußgelenk eine Achse (B) hat, die im wesentlichen zu Rotationsachse (O) parallel ist, und zwar ist der besagte Rotor dadurch gekennzeichnet, daß er die folgenden Einrichtungen umfaßt:
   . Mittel (13) zur Speicherung der spezifischen Rotordaten,
   . Mittel (14, 30) zum Bestimmen der relativen Geschwindigkeit (V) der Zellenverlagerung, der Rotationsgeschwindigkeit ($\omega$) des Rotors und der Dichte der Flüssigkeit ($\rho$),
   . Mittel (14, 30) zum Messen und Bestimmen des aerodynamischen Azimuts ($\varphi$) jedes profilierten Blattes während der Rotation,
   . Mittel (15) zum Erzeugen von für die Nennkräfte (P, T) repräsentativen Sollsignalen,
   . Mittel (17, 18) zur Berechnung des momentanen geometrischen Winkels ($\psi$) jedes profilierten Blattes in Abhängigkeit von den gespeicherten Daten, den bestimmten Werten und den Sollsignalen,
   . Mittel (22, 23, 28) zum Regeln jedes profilierten Blattes, die so beschaffen sind, daß sie in jedem Augenblick die Winkellage des Blattes im Einklang mit dem von den Rechenmitteln gelieferten berechneten Wert $\psi$ regeln.

9. Rotor nach Anspruch 8, dadurch gekennzeichnet, daß er einen Sensor (27) zum Messen des Istwertes $\psi_r$ des momentanen geometrischen Winkels jedes profilierten Blattes umfaßt, sowie Regelmittel der Art mit geschlossener Schleife, die so beschaffen sind, daß sie den Istwert $\psi_r$ und einen mit dem berechneten Wert $\psi$ in Verbindung stehenden Parameter empfangen und Regelungen der Winkellage des betreffenden profilierten Blattes gewährleisten, wobei in jedem Augenblick die Tendenz zur Reduktion des Winkelabstandes $\psi - \psi_r$ besteht.

10. Rotor nach Anspruch 9, dadurch gekennzeichnet, daß die Regelmittel folgende Stufen umfassen:
    - eine kinematische Kette (22), die der Gesamtheit der profilierten Blätter (9) gemein ist und deren mechanische Struktur so beschaffen ist, daß sie am Ausgang eine Drehung im Einklang mit einem Gesetz der mittleren periodischen Änderung des Anstellwinkels $\psi_m$ erzeugt,
    - einen hydraulischen Verteiler mit Servoventil (24), der mit jedem profilierten Blatt in Verbindung steht, wobei der besagte Verteiler hinsichtlich des betreffenden profilierten Blattes ein für den Winkelabstand $\psi - \psi_r$ repräsentatives Signal empfängt und so beschaffen ist, daß er eine zu dem besagten Winkelabstand in unmitterbarer Beziehung stehende hydraulische Leistung erzeugt,

- und einen drehenden hydraulischen Stellantrieb (25), der mit jedem profilierten Blatt in Verbindung steht und von dem entsprechenden Verteiler (24) die hydraulische Leistung erhält, wobei der besagte Stellantrieb einerseits einen in Drehung beweglichen Körper (25a) besitzt, der im Einklang mit dem Mittelgesetz $\psi_m$ von der kinematischen Kette (22) angetrieben wird, und andererseits eine mit dem betreffenden profilierten Blatt in Verbindung stehende Abtriebswelle (25b) zwecks Regelung der Winkellage $\psi$ des besagten Blattes.

11. Rotor nach Anspruch 10, dadurch gekennzeichnet, daß die besagte kinematische Kette (22) eine Phasenänderungsstufe (28) umfaßt, die so beschaffen ist, daß sie eine bestimmte Festlegung des Ursprungs des Gesetzes der periodischen Änderung des Anstellwinkels $\psi_m$ gestattet.

12. Rotor nach Anspruch 11, dadurch gekennzeichnet, daß die kinematische Kette die folgenden Teile umfaßt:
- eine Antriebswelle (8), die so angeordnet ist, daß sie zum Antrieb des Rotors eine Antriebsleistung erhält,
- eine Rotorwelle (3), die im Einklang mit der Rotationsachse des Rotors angeordnet und durch ein erstes Getriebe (31) mit Antriebswelle (8) gekoppelt ist, um den Rotor in Drehung anzutreiben,
- ein Zahnrad (32), das mittig an Rotorwelle (3) angeordnet und durch ein zweites Getriebe (33) mit Phasenänderungsstufe (28) verbunden ist, wobei das besagte Zahnrad Körper (25a) des mit jedem profilierten Blatt in Verbindung stehenden drehenden Stellantriebs antreibt,
- eine Seitenplatte (10) der Tragstruktur, die mit Rotorwelle (3) in Verbindung steht und die Körper (25a) der Stellantriebe sowie die die profilierten Blätter tragenden Wellen (12) abstützt,
- die Phasenänderungsstufe (28), eine mechanische Einrichtung, die so angeordnet ist, daß sie eine relative Winkelversetzung $\psi_{mo}$ zwischen dem ersten Getriebe (31) und dem zweiten Getriebe (33) gewährleistet.

13. Rotor nach Anspruch 12, dadurch gekennzeichnet, daß die mechanische Phasenänderungsstufe die folgenden Teile umfaßt:
- eine umkehrbare Kugelumlaufspindel (34), die an Antriebswelle (8) so angeordnet ist, daß sie sich gemeinsam mit dieser dreht und entlang der besagten Antriebswelle verschoben werden kann,
- eine Mutter (35) für die Kugelumlaufspindel, wobei die besagte Mutter mit einem zweiten Getriebe (33) in Verbindung steht und mit der Kugelumlaufspindel (34) so zusammenarbeitet, daß Drehung der besagten Mutter im Einklang mit der Verschiebung der Kugelumlaufspindel bewirkt wird,
- eine Schraubwinde (38), die über Kugelschublager (37) mit der Kugelumlaufspindel (35) in Verbindung steht, so daß die besagte Kugelumlaufspindel entlang der Antriebswelle verschoben werden kann,
- eine Schnecke (38), die mit Schraubwinde (36) in Verbindung steht, so daß die besagte Schnecke, die mit einem Motor zum Steuern der Phasenänderung (39) versehen ist, betätigt wird.

14. Rotor nach einem der Ansprüche 10, 11, 12 oder 13, dadurch gekennzeichnet, daß der hydraulische Verteiler mit Servoventil (24), der zu jedem profilierten Blatt (9) gehört, mit mindestens einer hydraulischen Speisepumpe (26) in Verbindung steht, die mit einem hydraulischen Speicher (41) zusammenarbeitet, wobei diese beiden Einheiten so angeordnet sind, daß der besagte hydraulische Speicher bei einem Überschuß verfügbarer Pumpenleistung Leistung aufnimmt und im umgekehrten Falle abgibt.

15. Rotor nach Anspruch 14, dadurch gekennzeichnet, daß die hydraulischen Speisepumpen (26) auf Tragstruktur (10) angeordnet sind, so daß sie sich gemeinsam mit dieser drehen, sowie dadurch, daß sie mechanisch mit einem festen Zahnkranz (42) in Verbindung stehen, so daß jede der besagten Pumpen drehend angetrieben wird.

16. Rotor nach einem der Ansprüche 8 bis 15, dadurch gekennzeichnet,
. daß die profilierten Blätter (9) an zwei Seitenplatten (10, 11) angelenkt sind, wobei sich die beiden Seitenplätten zur einen und zur anderen Seite befinden und die vorstehend genannte Tragstruktur bilden,
. daß die besagten Seitenplatten mit Rotorwelle (3) in Verbindung stehen und mit dieser drehend gekoppelt sind,
. daß jedes profilierte Blatt (9) zur einen und zur anderen Seite durch Wellen (12) abgestützt ist, wobei die besagten Wellen durch die Seitenplatten (10, 11) gehalten und drehend mit einem Getriebe (47) gekoppelt sind, während das besagte Getriebe selbst mit dem hydraulischen Stellantrieb (25) des betreffenden Blattes gekoppelt ist.

17. Rotor nach einem der Ansprüche 8 bis 16, umfassend fünf profilierte Blätter (9), die rings um Rotorwelle (3) des besagten Rotors verteilt sind.

18. Rotor nach einem der Ansprüche 8 bis 17, angeordnet an einer Zelle des Flugzeugs (1), bei dem Rotorwelle (3) an der einen Seite durch eine Nabe (4), die mit der Zelle des Flugzeugs in Verbindung steht, abgestützt und andererseits durch einen mit einem Lager versehenen festen profilierten Träger (5) gehalten wird, wobei der besagte Träger rücklaufend an der Zelle befestigt ist.

19. Flugzeug mit mindestens einem Rotor nach Anspruch 18, und einem mit seiner Zelle integrierten und mit Antriebswelle (8) jedes Rotors gekoppelten Antrieb.

## Claims

1. Process for controlling a rotor linked with an airframe capable of moving in fluid with a view to exerting at every instant the specified lifting and/or propulsive forces on said airframe, whereby said rotor comprises a support structure (5, 10, 11) mounted on said airframe (1) so as to be capable of being driven in rotation about an axis of rotation (O) and at least one profiled blade (9) extending parallel to the axis of rotation (O) and articulated on the support structure by means of a pivot link, axis (B) of which is substantially parallel to said axis of rotation (O), said process for controlling being of the type in which the rotor is caused to turn in the fluid about axis of rotation (O) at an angular velocity ($\omega$) and characterised in that it consists:

- in storing in advance data representative of the following structural parameters of the rotor: nE (equivalent span equal to the product of the number of profiled blades n of the rotor and span E of each profiled blade); R (distance between axis of rotation O and axis B of the pivot link); r (distance on the chord of the profiled blade between axis B and a point P situated substantially on the rear quarter of the profile); a (coefficient of conformal transformation of the profiled blade);

$$A = 2\pi(a_1 - a^2) + S\ ;$$
$$B = 2\pi(a_1 + a^2 - S);\ C_1 = 2\pi(\frac{a_1 a_2}{a^2} + \frac{a_2 a_3}{a^4}) - \pi(A_{-1} - a_1 A_1 - 2a_2 A_2 - 3a_3 A_3..)$$

where $a_1, a_2...a_i$ are the terms of conformal transformation developed in accordance with a Laurent series, $A_{-1}, A_1, ... A_i$ are the terms of the product of the conformal transformation and its conjugate developed in accordance with a Laurent series and S is the normal surface of the profile,

- in measuring and determining in each instance relative velocity (V) by which the airframe is displaced in relation to the fluid, angular velocity $\omega$ of the rotor and density $\rho$ of the fluid on the basis of measurements of dynamic pressure, static pressure and fluid temperature,

- in measuring and determining continuously during rotation aerodynamic azimuth $\varphi$ of each profiled blade in order to generate a corresponding signal of measurement, said aerodynamic azimuth being the algebraic angle formed, on the one hand, by the direction of the relative wind and, on the other hand, by plane M containing axis of rotation (O) and axis (B) of the pivot link of the profiled blade in question,

- in generating reference signals representative of the specified forces acting on the airframe (algebraic forces expressed by their projections P and T respectively along a direction perpendicular to the relative wind and in the direction of the relative wind),

- in continuously determining, for each profiled blade and on the basis of stored parameters, the magnitudes measured and determined as well as the reference signals, the instantaneous geometric angle at a given point in time $\psi$ defined by the chord of the profiled blade and by plane M corresponding to an accuracy of $\mp 0.2$ radians to the following equations (all the angles being defined in the trigonometric sense) :

$$(1) \qquad \cos \varphi_i = C \sin(\varphi - \psi) + \cos \psi \frac{r}{R\omega} (\omega - \frac{d\psi}{dt})$$

$$(2) \quad P = \frac{nE}{2\pi} \int_o^{2\pi} - \rho \left\{ \left[\Gamma - B(\omega - \frac{d\psi}{dt})\right]m - C_1(\omega - \frac{d\psi}{dt})^2 - A \frac{dl}{dt} \right\} \sin(\varphi - \psi) \cdot d\varphi$$

$$+ \frac{nE}{2\pi} \int_o^{2\pi} \rho \left\{ \left[\Gamma + A(\omega - \frac{d\psi}{dt})\right] l + C_1 \frac{d^2\psi}{dt^2} - B \frac{dm}{dt} \right\} \cos(\varphi - \psi) \cdot d\varphi$$

$$(3) \quad T = \frac{nE}{2\pi} \int_o^{2\pi} - \rho \left\{ \left[\Gamma - B(\omega - \frac{d\psi}{dt})\right]m - C_1(\omega - \frac{d\psi}{dt})^2 - A \frac{dl}{dt} \right\} \cos(\varphi - \psi) \cdot d\varphi$$

$$+ \frac{nE}{2\pi} \int_o^{2\pi} - \rho \left\{ \left[\Gamma + A(\omega - \frac{d\psi}{dt})\right] l + C_1 \frac{d^2\psi}{dt^2} - B \frac{dm}{dt} \right\} \sin(\varphi - \psi) \cdot d\varphi$$

with

$$(4) \quad o \leq \varphi_{11} \leq \varphi_{12} \leq \pi$$

(5) (a) $\varphi_i = \varphi_{11}$ and $\Gamma = 4\pi a R\omega \cos \varphi_{11}$ if $-\varphi_{11} < \varphi < \varphi_{11}$

(b) $\varphi_i = \varphi$ and $\Gamma = 4\pi a R\omega \cos \varphi$ if $\varphi_{11} \leq \varphi < \varphi_{12}$

(c) $\varphi_i = \varphi_{12}$ and $\Gamma = 4\pi a R\omega \cos \varphi_{12}$ if $\varphi_{12} < \varphi < 2\pi - \varphi_{12}$

(d) $\varphi_i = \varphi$ and $\Gamma = 4\pi a R\omega \cos \varphi$ if $2\pi - \varphi_{12} \leq \varphi \leq 2\pi - \varphi_{11}$

$$(6) \quad l = -R\omega [\sin \psi + C \cos(\varphi - \psi)]$$

$$(7) \quad m = R\omega [\cos \psi + C \sin(\varphi - \psi)] - \frac{r}{2}(\omega - \frac{d\psi}{dt})$$

and

$$(8) \quad C = \frac{V}{\omega R}$$

- and in adjusting the instantaneous geometric angle of each profiled blade to the value of angle $\psi$ obtained in respect of said blade.

2. Process for controlling according to claim 1. characterised in that one determines the instantaneous geometric angle at a given point in time $\psi$ by the following operations:

- for the totality of profiled blades:

. by advance determination of a table of correlation in respect of values between parameters $\varphi_{11}$, $\varphi_{12}$ and magnitudes $\frac{P}{C\omega^2 \rho}$ and $\frac{T}{\omega^2 \rho}$, this table being determined by allocating to parameters $\varphi_{11}$, $\varphi_{12}$ (the so-called commutation angles) discrete values being evenly distributed within variation range

EP 0 393 752 B1

(4) and by calculating for each pair of values $(\varphi_{11}, \varphi_{12})$ the values of $\dfrac{P}{C\omega^{2\rho}}$ and $\dfrac{T}{\omega^{2\rho}}$ solutions of equations (2), (3),

. by storing said correlation table,

. by continuously calculating magnitudes $C = \dfrac{V}{\omega^\rho}$ , $\dfrac{P}{C\omega^{2\rho}}$ and $\dfrac{T}{\omega^{2\rho}}$ as a function of the specified forces P and T and of the parameters V, $\omega$ and $\rho$ as determined,

. by scanning the correlation table with a view to determining the pair $\dfrac{P}{C\omega^{2\rho}}$ , $\dfrac{T}{\omega^{2\rho}}$ nearest to the corresponding magnitudes calculated and extraction of the corresponding values of parameters $\varphi_{11}$, $\varphi_{12}$,

- for each profiled wing:

. by solving differential equation (1) by giving to parameters $\varphi_{11}$, $\varphi_{12}$ the values extracted from the table with a view to obtaining the specified value of instantaneous geometric angle $\psi$ in respect of the profiled blade in question.

3. Process for controlling according to claim 2, characterised in that, for the totality of profiled blades :

. the correlation table is stored in the form of a matrix with four columns corresponding to the values of $\dfrac{P}{C\omega^{2\rho}}$ , $\dfrac{T}{\omega^{2\rho}}$ , $\varphi_{11}$, $\varphi_{12}$,

. scanning of said correlation table consists in reading the two columns $\dfrac{P}{C\omega^{2\rho}}$ , $\dfrac{T}{\omega^{2\rho}}$ with a view to identifying the pair nearest to the calculated magnitudes and extracting the corresponding values of $\varphi_{11}$ and $\varphi_{12}$ in the other two columns.

4. Process for controlling according to one of claims 2 or 3, characterised in that, for each profiled blade, differential equation (1) is solved at any point in time by a calculation exhibiting the following stages :

. comparing measured value $\varphi$ with commutation angles $\varphi_{11}$, $\varphi_{12}$ with a view to determining the value of $\varphi_i$ by conditions (5),

. utilising the value of $\varphi$ and $\varphi_i$ as well as the measured, calculated or stored parameters C, $\omega$, r, R, in order to solve said differential equation by a RUNGE-KUTTA method.

5. Process for controlling according to one of claims 2, 3 or 4, characterised in that one continually measures real value $\psi_r$ of the instantaneous geometric angle at a given point in time of each profiled blade and in that one introduces this real value into the computer by way of integration constant when solving the differential equation.

6. Process for controlling according to one of the preceding claims, characterised in that the instantaneous geometric angle at a given point in time $\psi$ is determined, continuously and in sequential manner, by generating timer impulses the frequency of which is high by comparison with the number of revolutions per second of the rotor, by reading the measured value signals and the reference signals with each timer impulse and by carrying out, between two timer impulses, the calculations with a view to determining the value of instantaneous geometric angle $\psi$.

7. Process for controlling according to one of the preceding claims, characterised in that control of the instantaneous geometric angle of each profiled blade consists:

. in ensuring mean control of the totality of profiled blades according to law of mean cyclic incidence $\psi_m = f (\varphi)$ by a reversible kinematic chain capable of providing or recovering the energy according to the load characteristics of the profiled blades,

. in ensuring complementary control of each profiled blade, on the basis of the calculated value of instantaneous geometric angle $\psi$, by adding at each instant an additional incidence $\psi_c = \psi - \psi_m$, with the aid of an activator.

8. Rotor intended to be caused to rotate in a fluid with a view to developing specified lifting and/or propulsive forces (P, T) acting on an airframe (1), whereby said rotor comprises a support structure (5, 10, 11) so designed as to be mounted on the airframe with a view to being capable of being driven in rotation about an axis of rotation (O) and at least one profiled blade (9) extending parallel to axis of rotation (O) and articulated on the support structure by means of a pivot link, axis B of which is substantially parallel to axis of rotation (O), said rotor being characterised in that it comprises:

21

. means (13) for storing specific rotor data,

. means (14, 30) for measuring and determining relative displacement velocity (V) of the airframe, angular velocity ($\omega$) of the rotor and fluid density ($\rho$),

. means (14, 30) for measuring and determining aerodynamic azimuth ($\varphi$) of each profiled blade in the course of rotation,

. means (15) for generating reference signals representative of the specified forces (P, T),

. means (17, 18) for calculating instantaneous geometric angle at a given point in time ($\psi$) of each profiled blade as a function of the stored data, the values determined and the reference signals,

. means (22, 23, 28) for controlling each profiled blade, so designed as to adjust the angular position of the blade at any point in time to calculated value ($\psi$) as supplied by the means for calculation.

9. Rotor according to claim 8, characterised in that it comprises a sensor (27) for measuring real value $\psi_r$ of the instantaneous geometric angle of each profiled blade, whereby the control means are of closed-loop type and capable of receiving real value $\psi_r$ and a parameter associated with calculated value $\psi$ while ensuring control of the angular position of the profiled blade in question, subject to a tendency to reduce at any point in time angular distance $\psi$ - $\psi_r$.

10. Rotor according to claim 9, characterised in that the control means comprise:
- a kinematic chain (22) common to the totality of profiled blades (9) and with a mechanical structure so designed as to generate by way of output a rotation according to law of mean cyclic incidence $\psi_m$ ,
- a hydraulic distributor (24) with servo-valve, associated with each profiled blade, said distributor receiving a signal representative of angular distance $\psi$ - $\psi_r$ in respect of the profiled blade in question and capable of generating a hydraulic power directly associated with said angular distance,
- and a rotary hydraulic activator (25) associated with each profiled blade and receiving the hydraulic power of corresponding distributor (24), said activator comprising, on the one hand, a body (25a) capable of moving in rotation and driven by kinematic chain (22) according to mean law $\psi_m$, and on the other hand an output shaft (25b) coupled with the profiled blade in question with a view to controlling angular position $\psi$ of the latter.

11. Rotor according to claim 10, characterised in that the above kinematic chain (22) comprises a phase modifier (28) so designed as to enable the origin of law $\psi_m$ of cyclic incidence to be set in specified manner.

12. Rotor according to claim 11, characterised in that the kinematic chain comprises:
- a drive shaft (8) arranged to receive a drive power for driving the rotor,
- a rotor shaft (3) arranged according to the axis of rotation of the rotor and coupled by a first transmission (31) with drive shaft (8) with a view to driving the rotor in rotation,
- a gear wheel (32) centred on rotor shaft (3) and coupled by a second transmission (33) with phase modifier (28), whereby said gear wheel drives body (25a) of the rotary activator associated with each profiled blade,
- a side plate (10) of the support structure, connected with rotor shaft (3) and supporting the bodies (25a) of the activators and shafts (12) carrying the profiled wings,
- phase modifier (28), which is of mechanical type and so arranged as to ensure an angular displacement $\psi_{mo}$ between first transmission (31) and second transmission (33).

13. Rotor according to claim 12, characterised in that the mechanical phase modifier comprises:
- a reversible ball screw (34) carried by drive shaft (8) so as to rotate together with the latter and capable of translational motion along said drive shaft,
- a ball screw nut (35) connected with second transmission (33) and cooperating with ball screw (34) so as to generate rotation of said nut in accordance with the translational motion of the ball screw,
- a screw jack (36) connected via thrust ball bearings (37) with ball screw (35) so as to be able to move said screw along the drive shaft,
- an endless screw (38) coupled with screw jack (36) with a view to actuating the latter, said endless screw being endowed with a motor (39) for controlling phase modification.

14. Rotor according to one of claims 10, 11, 12 or 13, characterised in that hydraulic distributor (24) with servo-valve, which is associated with each profiled blade (9), is connected with at least one hydraulic feed pump (26) associated with a hydraulic accumulator (41), said unit being so arranged that in case of excessive pump power said hydraulic accumulator is in a state of loading and in the opposite case in a state of returning power.

15. Rotor according to claim 14, characterised in that hydraulic feed pumps (26) are mounted on support structure (10) so as to rotate with the latter and are mechanically coupled with a fixed gear ring (42) with a view to driving each of said pumps in rotation.

16. Rotor according to one of claims 8 to 15, characterised in that:
. profiled blades (9) are articulated on to side plates (10, 11) located on either side and constituting the above support structure,
. said side plates are linked by rotor shaft (3) and coupled in rotation with the latter,
. each profiled blade (9) is mounted on either side of shafts (12) maintained by side plates (10, 11) and coupled in rotation with a transmission (47), said transmission in turn being coupled with hydraulic activator (25) which is associated with the blade in question.

17. Rotor according to one of claims 8 to 16, comprising five profiled blades (9) distributed about shaft of rotation (3) of said rotor.

18. Rotor according to one of claims 8 to 17, mounted on an airframe of aircraft (1), in which rotor shaft (3) is carried, on the one side, by a hub (4) connected with the airframe of the aircraft, and on the other hand maintained by a fixed profile member (5) endowed with a bearing, said member returning so as to be joined with the airframe.

19. Aircraft comprising at least one rotor according to claim 18 and a drive integrated with its airframe and coupled with drive shaft (8) of each rotor.

Fig. 1

Fig. 2

Fig. 3

Fig.4

Fig. 5

Fig. 6

Chaîne de puissance

| Actionneurs | Rotor | Capteurs |

16

18

Calculateurs génération de $\psi$

$\psi$

$\omega$, $\varphi_A$, $\psi_r$

V

20

Horloge

$\varphi_{11}$, $\varphi_{12}$

17

Calculateur choix de $\varphi_{11}$, $\varphi_{12}$

$\omega$

V, $\rho$

P, T

14

Centrale anémométrique

13

Mémoire morte

15

Signaux de consigne

Fig. 7

$$\omega = 1$$
$$C = 2$$
$$\varphi_{11} = 90°$$
$$\varphi_{12} = 90°$$

Calculer $\dfrac{P}{C\omega^2}$ et $\dfrac{T}{\omega^2}$ d'après (1) à (8)

Ecrire dans le tableau la ligne

$\varphi_{12}$ , $\varphi_{11}$ , $\dfrac{P}{\rho_{C\omega^2}}$ , $\dfrac{T}{\rho_{.\omega^2}}$

$$\varphi_{11} = \varphi_{11} - \Delta\varphi_{11}$$

$\varphi_{11} < 90°$  — n / o

$$\varphi_{11} = \varphi_{12}$$

$$\varphi_{12} = \varphi_{12} + \Delta\varphi_{12}$$

$\varphi_{12} > 180°$ — n / o

Réorganiser le tableau

$\dfrac{P}{\rho_{C\omega^2}}$ , $\dfrac{T}{\rho_{\omega^2}}$ , $\varphi_{12}$ , $\varphi_{11}$

FIN

$\Delta\varphi_{11}$ incrément sur $\varphi_{11}$
$\Delta\varphi_{12}$ incrément sur $\varphi_{12}$

# Fig. 8

| $\dfrac{P}{\rho C W^2}$ ( $m^4$ ) | $\dfrac{T}{\rho W^2}$ ( $m^4$ ) | Phi12 ( ° ) | Phi11 ( ° ) |
|---|---|---|---|
| 0.0 | 0.0 | 90 | 90 |
| 0.0 | -2.5 | 94 | 86 |
| 0.0 | -5.0 | 97 | 83 |
| 0.0 | -7.5 | 101 | 79 |
| 0.0 | -10.0 | 106 | 74 |
| 0.0 | -12.5 | 109 | 71 |
| 0.0 | -15.0 | 114 | 66 |
| 0.0 | -17.5 | 118 | 62 |
| 0.0 | -20.0 | 123 | 57 |
| 0.0 | -22.5 | 129 | 51 |
| 0.0 | -25.0 | 136 | 44 |
| 0.0 | -27.5 | 144 | 36 |
| 0.0 | -30.0 | 165 | 15 |
| 0.0 | 0.0 | 95 | 95 |
| 0.0 | -2.5 | 99 | 91 |
| 0.0 | -5.0 | 103 | 88 |
| 0.0 | -7.5 | 108 | 84 |
| 0.0 | -10.0 | 111 | 80 |
| 0.0 | -12.5 | 116 | 77 |
| 0.0 | -15.0 | 121 | 73 |
| 0.0 | -17.5 | 134 | 65 |
| 0.0 | -20.0 | 142 | 61 |
| 0.0 | -22.5 | 158 | 56 |
| 10.0 | 0.0 | 100 | 100 |
| 10.0 | -2.5 | 104 | 96 |
| 10.0 | -5.0 | 108 | 93 |
| 10.0 | -7.5 | 113 | 90 |
| 10.0 | -10.0 | 118 | 86 |
| 10.0 | -12.5 | 124 | 83 |
| 10.0 | -15.0 | 130 | 79 |
| 10.0 | -17.5 | 138 | 76 |
| 10.0 | -20.0 | 150 | 72 |
| 15.0 | 0.0 | 104 | 104 |
| 15.0 | -2.5 | 109 | 101 |
| 15.0 | -5.0 | 114 | 98 |
| 15.0 | -7.5 | 119 | 95 |
| 15.0 | -10.0 | 126 | 91 |
| 15.0 | -12.5 | 133 | 88 |
| 15.0 | -15.0 | 142 | 85 |
| 20.0 | 0.0 | 109 | 109 |
| 20.0 | -2.5 | 115 | 106 |
| 20.0 | -5.0 | 120 | 103 |
| 20.0 | -7.5 | 127 | 100 |
| 20.0 | -10.0 | 135 | 97 |
| 20.0 | -12.5 | 146 | 94 |
| 25.0 | 0.0 | 114 | 114 |
| 25.0 | -2.5 | 121 | 111 |
| 25.0 | -5.0 | 127 | 108 |
| 25.0 | -7.5 | 136 | 105 |
| 25.0 | -10.0 | 149 | 102 |
| 30.0 | 0.0 | 120 | 120 |
| 30.0 | -2.5 | 127 | 117 |
| 30.0 | -5.0 | 136 | 114 |
| 30.0 | -7.5 | 149 | 111 |
| 35.0 | 0.0 | 125 | 125 |
| 35.0 | -2.5 | 134 | 122 |
| 35.0 | -5.0 | 147 | 119 |
| 40.0 | 0.0 | 131 | 131 |
| 40.0 | -2.5 | 143 | 128 |
| 45.0 | 0.0 | 138 | 138 |
| 50.0 | 0.0 | 146 | 146 |
| 55.0 | 0.0 | 155 | 155 |
| 60.0 | 0.0 | 174 | 174 |

$R = 1{,}1$ m

$r = 0{,}4$ m

$E = 3{,}5$ m

$n = 5$

$w = 3{,}15$ tr s

$a = 0{,}2269$

$A = -1{,}258 \; 10^{-2} \, m^2$

$B = 4{,}891 \; 10^{-1} \, m^2$

$C_1 = 6{,}233 \; 10^{-3} \, m^3$

Précision sur

$\varphi_{11}$ et $\varphi_{12} : \pm 1°$

**Fig. 9**

$$\boxed{\text{Lire } V, \rho, P, T, \omega}$$

$$\boxed{\text{Calculer } \frac{P}{\rho C \omega^2} \text{ et } \frac{T}{\rho \omega^2}}$$

$$\boxed{\text{Lire successivement les zones du tableau jusqu'à obtention de } \frac{P}{\rho C \omega^2} \text{ la plus proche de la valeur désirée}}$$

$$\boxed{\text{Dans cette zone, rechercher la ligne pour laquelle } \frac{T}{\rho \omega^2} \text{ est la plus proche de la valeur désirée}}$$

$$\boxed{\text{Lire sur la ligne } \varphi_{12} \text{ et } \varphi_{11}}$$

$$\boxed{\text{Afficher ces valeurs en sortie}}$$

Boucle synchronisée par l'horloge 20

Fig. 10

$$\text{Lire } \omega, \varphi_A, \psi_r, V, \varphi_{11}, \varphi_{12}$$

$$\varphi = \varphi_A - i$$
Calculer $\varphi_i$ d'après(5)

Former $F(\psi_r, \varphi) = \dfrac{R}{r}(\cos\psi_r + C\sin(\varphi - \psi_r) - \xi) + 1$ avec

$\xi = \cos\varphi_i$ dans le cas 5(a) ou 5(c) et

$\xi = \cos\varphi$ dans le cas 5(b) ou 5(d)

$$DX1 = F(\psi_r, \varphi)$$

$$DX\,2 = F(\psi_r + \tfrac{h}{2}\cdot DX1, \varphi + \tfrac{h}{2})$$

$$DX\,3 = F(\psi_r + \tfrac{h}{2}\cdot DX2, \varphi + \tfrac{h}{2})$$

$$DX\,4 = F(\psi_r + h\cdot DX3, \varphi + h)$$

$$\psi = \psi_r + \tfrac{h}{6}(DX1 + 2(DX2 + DX3) + DX4)$$

afficher en sortie
$\psi$

Boucle synchronisée par l'horloge 20 de période t

h = tω

Fig.11

Déphaseur asservi 28

$\Psi_A$ 30

$\Psi_{mo} = -i$

+ − Ampli+moteur +vérin à vis (36,38,39)

vis-écrou $\Psi_{mor}$

capteur 40

$\Psi_m$

Actionneur asservi

$\Psi$

+ − Ampli+servovalve 24

Actionneur 25

$\Psi_c$ − + $\Psi_r$

capteur 27

EP 0 393 752 B1

Fig. 12

Fig. 13

12

27

30

25a

25b

42

32

10

33

3

31

28

8

Fig. 14

39

38

36

40

34

35

33

8

37

31

Fig. 15

Fig. 16

EP 0 393 752 B1

Fig 17

41 26 10 42 45

48

30

32

24

27

12

39 28 43

32 3

P3

P3

EP 0 393 752 B1